# EUROPEAN PATENT APPLICATION

(11) **EP 2 863 619 A1**
(43) Date of publication of application: **22.04.2015**
(21) Application number: 14175692.4
(22) Date of filing: 03.07.2014
(51) Int. Cl.: H04N 1/32, G06T 11/60

(54) **Electronic device and method for controlling object display**

(30) Priority: 14.10.2013 KR 20130122137
(71) Applicant: Samsung Electronics Co., Ltd, Gyeonggi-do 443-742 (KR)
(72) Inventor: Jeong, Jin-Hong, 443-742 Gyeonggi-do (KR); Lee, Seung-Cheol, 443-742 Gyeonggi-do (KR); Park, Seok-Kyoun, 443-742 Gyeonggi-do (KR); Lee, Sun-Kee, 443-742 Gyeonggi-do (KR); Cheong, Cheol-Ho, 443-742 Gyeonggi-do (KR); Cho, Joon-Young, 443-742 Gyeonggi-do (KR); Choi, Bo-Kun, 443-742 Gyeonggi-do (KR); Lee, Kyung-Hee, 443-742 Gyeonggi-do (KR)
(74) Representative: Jenkins, Richard Gavin

(57) **Abstract**

An electronic device and a method for controlling an object display are provided. The method of controlling an object display includes displaying at least one input object on a screen, creating and storing property information of the at least one displayed object, creating a preview window in a region of the screen so as to display the at least one object on the preview window, and controlling a display of the object by using the property information of the at least one selected object in correspondence to the at least one displayed object.

## Description

### BACKGROUND

### 1. Field of the Invention

The present invention generally relates to an electronic device and a method for controlling an object display.

### 2. Description of the Related Art

Recently, various services and additional functions provided by an electronic device have been gradually expanded. In order to increase an effective value of the electronic device and meet various demands of users, various applications executable by the electronic device have been developed.

Accordingly, at present, a large number of applications can be stored in the electronic device which is portable and has a touch screen, such as a smart phone, a mobile phone, a notebook Personal Computer (PC), a tablet PC, and the like. Applications used for inputting an object with a finger or an input unit, such as a note, a memo pad and a diary in which writing can be input, or objects (or icons) for executing the applications are displayed on a screen of the electronic device.

A user can input writing or draw pictures through the applications. In this case, the user would want to know how at least one input object is input. In order to satisfy the user's desire described above, a technology of reproducing at least one input object has been required.

When at least one input object is reproduced in the conventional art, there is a limit in that at least one object corresponding to a part that a user desires cannot be reproduced because the object is reproduced according to an input sequence or time. Accordingly, there is a need for an improvement of convenience for a user by providing a reproducing method capable of creating at least one object and satisfying a user's desire through property information on the at least one created object.

### SUMMARY

Accordingly, the present invention has been made to solve at least the above-mentioned problems, and an aspect of the present invention provides an electronic device and a method for controlling an object display.

In accordance with an aspect of the present disclosure, a method of controlling to display an object of an electronic device is provided. The method includes: displaying at least one input object on a screen; creating and storing property information of at least one displayed object; creating a preview window on which the at least one object is displayed so as to display the preview window in a region of the screen; and controlling to display the at least one object by using the property information of the at least one object when the at least one object to be displayed is selected.

Another aspect of the present invention provides a visual effect to at least one selected object so as to display the object with the visual effect when the at least one object displayed on at least one of a screen and a preview window is selected.

Another aspect of the present invention reproduces at least one selected object in sequence of a time when the object is input, or reproduces remaining objects except for the at least one selected object.

Another aspect of the present invention creates and displays a progress bar including a time interval at which at least one selected object is reproduced by using property information when the at least one object is selected.

A further aspect of the present invention reproduces an object which corresponds to a point of a progress bar at which the object is input, among one or more displayed objects, corresponding to an input time.

Another aspect of the present invention displays a preview image including an object corresponding to a point at which the object is input.

According to the aspect of the present disclosure, the progress bar may include at least one of a time interval at which at least one object displayed on the screen is reproduced and a time interval at which at least one selected object is reproduced.

Another aspect of the present invention reproduces at least two objects by using any one of sequence of a time when the two objects are input, recent input sequence and a selection of a user when the at least two objects are selected.

According to the aspect of the present disclosure, the property information may include at least one of time information with relation to at least one of an input and a correction of the object, sequence information with relation to at least one of the input and the correction of the object, information on an input unit performing at least one of the input and the correction of the object, identification information of the user performing at least one of the input and the correction of the object, and information of the text into which the object is converted.

According to the aspect of the present disclosure, the at least one object may be selected by at least one of a touch or a hovering of an input unit and a user's sight.

According to the aspect of the present disclosure, further, the at least one object is selected by at least one of a line and a region which are formed by a trace of the input unit.

According to the aspect of the present disclosure, a region in which the at least one object is selected may be enlarged in proportion to a height from the screen to the input unit or reduced in reverse proportion to the height in the case that the input unit is in a hovering mode.

In accordance with another aspect of the present invention, a method of controlling to display an object of an electronic device is provided. The method includes extracting property information of at least one object displayed on a screen; displaying at least one of information on at least one input unit with which the at least one object is input by using the extracted property information, and user information; and reproducing the at least one object corresponding to a selection of at least one of the information on the at least one input unit and the user information which are displayed.

The aspect of the present disclosure may provide a visual effect to the at least one object corresponding to the selection so as to display the object with the visual effect.

According to the aspect of the present disclosure, at least one object may be reproduced by using corresponding property information.

The aspect of the present disclosure may create and display a progress bar including a time interval at which the at least one object is reproduced in correspondence to the selection of any one of at least one input unit and user information which are displayed.

The aspect of the present disclosure may reproduces an object which corresponds to a point of the progress bar at which the object is input, among one or more displayed objects corresponding to the selection, in correspondence to an input time.

According to the aspect of the present disclosure, the input unit may include at least one of a finger, an electronic pen, a digital type pen, a pen capable of performing short-range communication, a joystick and a stylus pen with which the object is input through a touch and a hovering thereof on the screen, and operate in at least one of a fountain pen mode, a marker mode and a pencil mode in which a visual effect is provided to the at least one object corresponding to the selection of any one of at least input unit and user information which are displayed, according to a change of the mode, so that the at least one object with the visual effect is displayed.

According to the aspect of the present disclosure, the user information may include identifier information of users who make the objects displayed on the screen respectively.

In accordance another aspect of the present invention, an electronic device for controlling to display an object is provided. The electronic device includes a screen on which at least one object to be input is displayed; and a controller which creates property information on the at least one object, creates and displays a preview window including the at least one object, and controls to display the at least one object by using the property information when the at least one object is selected by a user.

According to the aspect of the present disclosure, the controller may provide a visual effect to the at least one object and displays the object with the visual effect when the at least one object displayed on at least one of the screen and the preview window is selected.

According to the aspect of the present disclosure, the controller may reproduce the at least one selected object in sequence of a time when the at least one selected object is input by using the property information, or reproduce remaining objects except for the at least one selected object.

According to the aspect of the present disclosure, the controller may create a progress bar including a time interval at which the at least one selected object is reproduced, by using the property information, and displays the progress bar on the screen in the case that the at least one object is selected.

According to the aspect of the present disclosure, the controller may reproduce an object corresponding to a point of the progress bar at which the object is input, among the at least one object, in sequence of a time when the object is input.

According to the aspect of the present disclosure, the controller may create and display a preview image including the object corresponding to the point at which the object is input.

According to the aspect of the present disclosure, the controller may display the at least two objects by using any one of sequence of a time and recent input sequence when the two objects are input, and a selection of a user for the two objects in the case that at least two objects are selected, in which the objects have different layers respectively.

According to the aspect of the present disclosure, the controller may extract property information corresponding to the at least one object in response to a detection by at least one of a touch or hovering of an input unit and a user's sight.

According to the aspect of the present disclosure, the controller may select the at least one object by analyzing a height from the screen to the input unit in the case that the input unit is in a hovering mode.

According to the aspect of the present disclosure, the controller may extract property information corresponding to an input of the at least one object, and display at least one of information on at least one unit with which the at least one object is input by using the extracted property information, and user information on the screen.

According to the aspect of the present disclosure, the controller may reproduce the at least one object on the screen in correspondence to a selection of at least one of the information on the at least one input unit and the information on a user.

According to the aspect of the present disclosure, the input unit may include at least one of a finger, an electronic pen, a digital type pen, a pen capable of performing short-range communication, a joystick and a stylus pen with which the object is input through a touch and a hovering thereof on the screen, and operates in at least one of a fountain pen mode, a marker mode and a pencil mode, and the controller may provide a visual effect to the at least one object corresponding to the selection in response to a change of the mode so as to display the object with the visual effect.

According to the present invention, it is possible to improve convenience for a user by controlling a display of at least one reproduced object. Further, the at least one object is reproduced by using the property information, and a user is allowed to selectively reproduce the at least one object, thereby satisfying a user's desire.

According to an embodiment of the present invention, the at least one input object is displayed on the screen, property information of the at least one displayed object is created, a preview window for displaying at least one object is created and displayed in a region of the screen, and a display is controlled by using the property information of the at least one selected object in correspondence to the selection of the at least one displayed object, resulting in providing various visual effects to the user.

According to another embodiment of the present invention, furthermore, the property information of at least one object displayed on the screen is extracted and used to display at least one of user information and at least one input unit with which the at least one object is input, and at least one object is reproduced corresponding to the selection of the at least one of the user information and the at least one input unit which are displayed, thereby selectively reproducing the at least one object which the user selects.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a block diagram illustrating an electronic device according to embodiments of the present invention;
FIG. 2 is a schematic view illustrating an input unit and a screen according to embodiments of the present invention;
FIG. 3 is a flowchart illustrating a process of displaying an object of an electronic device according to a first embodiment of the present invention;
FIG. 4A is a screen view illustrating an input of a square shaped object on the screen according to the first embodiment of the present invention;
FIG. 4B is a screen view illustrating an input of a triangle shaped object on the screen according to the first embodiment of the present invention;
FIG. 4C is a screen view illustrating an input of a circle shaped object on the screen according to the first embodiment of the present invention;
FIG. 5A is a screen view illustrating a control of displaying a corresponding object corresponding to a selection of an object displayed on a preview window according to the first embodiment of the present invention;
FIG. 5B is a screen view illustrating a control of reproducing a corresponding object corresponding to a selection of an object displayed on a preview window according to the first embodiment of the present invention;
FIG. 5C is a screen view illustrating a completion of reproducing a corresponding object corresponding to a selection of an object displayed on a preview window according to the first embodiment of the present invention;
FIG. 5D is a screen view illustrating a control of displaying at least two corresponding objects corresponding to a selection of at least two objects displayed on a preview window according to the first embodiment of the present invention;
FIG. 5E is a screen view illustrating a control of reproducing at least two corresponding objects corresponding to a selection of at least two objects displayed on a preview window according to the first embodiment of the present invention;
FIG. 5F is a screen view illustrating a control of reproducing at least two corresponding objects corresponding to a selection of at least two objects displayed on a preview window according to the first embodiment of the present invention;
FIG. 5G is a screen view illustrating a completion of reproducing at least two corresponding objects corresponding to a selection of at least two objects displayed on a preview window according to the first embodiment of the present invention;
FIG. 6A is a screen view illustrating at least one object displayed on a screen according to a second embodiment of the present invention;
FIG. 6B is a screen view illustrating a control of displaying a corresponding object corresponding to a selection of an object displayed on a preview window according to the second embodiment of the present invention;
FIG. 6C is a screen view illustrating a control of displaying at least two corresponding objects corresponding to a selection of at least two objects displayed on a preview window according to the second embodiment of the present invention;
FIG. 6D is a screen view illustrating at least one object displayed on a screen according to the second embodiment of the present invention;
FIG. 7A is a screen view illustrating at least one object displayed on a screen according to a third embodiment of the present invention;
FIG. 7B is a screen view illustrating a control of displaying objects corresponding to a control of a progress bar displayed on a screen according to the third embodiment of the present invention;
FIG. 7C is a screen view illustrating a control of displaying the objects corresponding to a control of a progress bar displayed on a screen according to the third embodiment of the present invention;
FIG. 7D is a screen view illustrating a control of displaying the objects corresponding to a control of a progress bar displayed on a screen according to the third embodiment of the present invention;
FIG. 8A is a screen view illustrating at least one object displayed on a screen according to the first embodiment of the present invention;
FIG. 8B is a screen view illustrating a control of reproducing a corresponding object by controlling a reproduction time of a progress bar displayed on a screen according to the first embodiment of the present invention;
FIG. 8C is a screen view illustrating a control of reproducing a corresponding object by controlling a reproduction time of a progress bar displayed on a screen according to the first embodiment of the present invention;
FIG. 8D is a screen view illustrating a control of reproducing a corresponding object by controlling a reproduction time of a progress bar displayed on a screen according to the first embodiment of the present invention;
FIG. 9 is a flowchart illustrating a process of reproducing an object of an electronic device according to the second embodiment of the present invention;
FIG. 10A is a screen view illustrating a type of an input unit for inputting at least one object displayed on a screen according to the embodiment of the present invention;
FIG. 10B is a screen view illustrating a control of reproducing an object when a finger is an input unit for inputting at least one object according to the embodiment of the present invention;
FIG. 10C is a screen view illustrating a control of reproducing an object when a pen is an input unit for inputting at least one object according to the embodiment of the present invention;
FIG. 10D is a screen view illustrating a control of displaying at least one object in a changed mode when a mode for the input unit is changed, according to the embodiment of the present invention;
FIG. 10E is a screen view illustrating a result of displaying at least one object in a changed mode when a mode for the input unit is changed, according to the embodiment of the present invention;
FIG. 11 is a flowchart illustrating a process of reproducing an object of an electronic device according to the third embodiment of the present invention;
FIG. 12A is a screen view illustrating a type of an input unit for inputting at least one object displayed on a screen according to the embodiment of the present invention;
FIG. 12B is a screen view illustrating a control of reproducing at least one object in the case that a user A inputs the at least one object according to the embodiment of the present invention; and
FIG. 12C is a screen view illustrating a control of reproducing at least one object in the case that a user B inputs the at least one object according to the embodiment of the present invention.

### DETAILED DESCRIPTION OF EMBODMENTS OF THE PRESENT INVENTION

The present invention may have various modifications and embodiments and thus will be described with reference to specific embodiments in detail. Therefore, it should be understood that there is no intent to limit example embodiments to the particular forms disclosed, but on the contrary, example embodiments are intended to cover all modifications, equivalents, and alternatives falling within the scope of the invention.

While terms including ordinal numbers, such as "first" and "second," etc., may be used to describe various components, such components are not limited by the above terms. The terms are used merely for the purpose to distinguish an element from the other elements. For example, a first element could be termed a second element, and similarly, a second element could be also termed a first element without departing from the scope of the present invention. As used herein, the term "and/or" includes any and all combinations of one or more of the associated listed items.

The terms used herein are merely used to describe specific embodiments, and are not intended to limit the present invention. As used herein, the singular forms are intended to include the plural forms as well, unless the context clearly indicates otherwise. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein have the same meaning as commonly understood by those of skill in the art. Such terms as those defined in a generally used dictionary are to be interpreted to have the meanings equal to the contextual meanings in the relevant field of art, and are not to be interpreted to have ideal or excessively formal meanings unless clearly defined in the present specification. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, an operation principle for an embodiment of the present invention will be described in detail with reference to the accompanying drawings. In the following description of the present invention, a detailed description of known functions and configurations incorporated herein will be omitted when it may make the subject matter of the present invention unclear. The terms which will be described below are terms defined in consideration of the functions in the present invention, and may be different according to users, intentions of the users, or customs. Therefore, its definition will be made based on the overall contents of this specification.

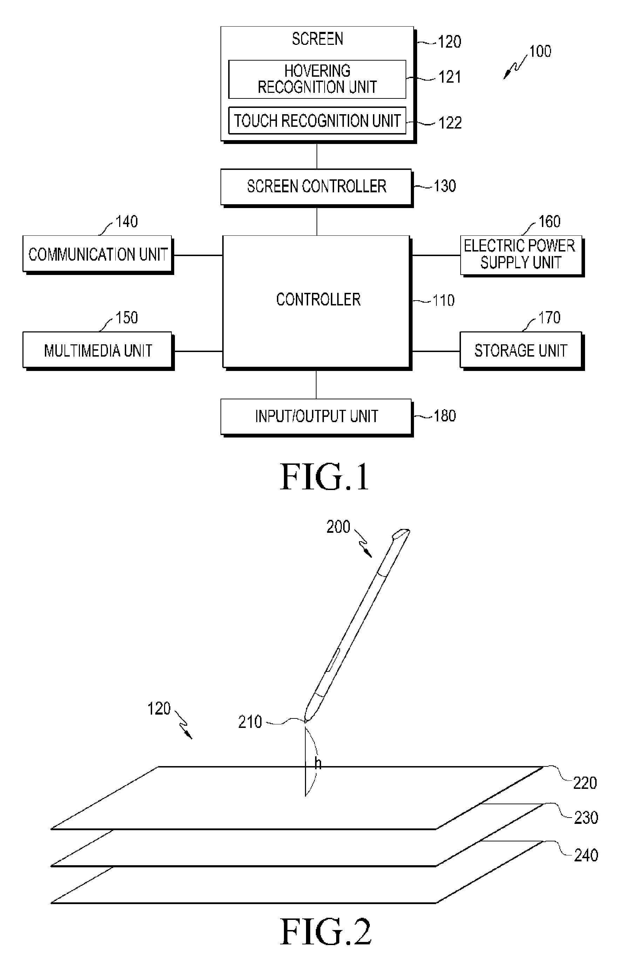

FIG. 1 is a block diagram illustrating an electronic device according to embodiments of the present invention.

Referring to FIG. 1, the electronic device 100 is connected to an external device by using at least one of a communication unit 140, a connector, and an earphone connection jack. The external device includes various devices detachably attached to the electronic device 100 by a wire, such as an earphone, an external speaker, a Universal Serial Bus (USB) memory, a charger, a cradle/dock, a Digital Multimedia Broadcasting (DMB) antenna, a mobile payment related device, a health management device (blood sugar tester or the like), a game machine, a car navigation device and the like. Further, the electronic device includes a Bluetooth communication device, a Near Field Communication (NFC) device, a WiFi Direct communication device, and a wireless Access Point (AC) which can wirelessly access a network. The electronic device can access another device by wire or wirelessly, such as a portable terminal, a smart phone, a tablet Personal Computer (PC), a desktop PC, a digitizer, an input device, a camera and a server.

Referring to FIG. 1, the electronic device 100 includes a controller 110, at least one screen 120, at least one screen controller 130, a communication unit 140, a multimedia unit 150, an electric power supply unit 160, a storage unit 170, and an input/output unit 180.

The electronic device of the present invention is a mobile terminal capable of performing data transmission/reception and a voice/video call. The electronic device may include one or more screens, and each of the screens may display one or more pages. The electronic device may include a smart phone, a tablet PC, 3D-TeleVision (TV), a smart TV, a Light Emitting Diode (LED) TV, and Liquid Crystal Display (LCD) TV, and also may include all devices which can communicate with a peripheral device or another terminal located at a remote place. Further, the one or more screens included in the electronic device may receive an input by at least one of a touch and a hovering input.

The at least one screen 120 provides a user with a user interface corresponding to various services, i.e. a call, a data transmission, broadcasting, photographing, and an input of characters. With respect to each screen, a hovering recognition unit 121 which recognizes an input by using a hovering of at least one of an input unit and a finger may be referred to as a hovering recognition panel, and a touch recognition unit 122 which recognizes an input by using a touch of at least one of the finger and the input unit may be referred to as a touch panel. Each screen can transmit an analog signal, which corresponds to at least one touch or at least one hovering input in a user interface, to a corresponding screen controller. As described above, the electronic device 100 may include a plurality of screens, and each of the screens may include a screen controller receiving an analog signal corresponding to a touch or a hovering. The screens may be connected with plural housings through hinge connections, respectively, or the plural screens may be located at one housing without the hinge connection. The electronic device 100 according to the various embodiments of the present disclosure may include at least one screen as described above, and one screen will be described hereinafter for convenience of the description.

The input unit according to the present invention may include at least one of a finger, an electronic pen, a digital type pen, a pen without an integrated circuit, a pen with an integrated circuit, a pen with an integrated circuit and a memory, a pen capable of performing short-range communication, a pen with an additional ultrasonic detector, a pen with an optical sensor, a joystick and a stylus pen, which can provide an order or an input to the electronic device in a state of contacting a digitizer, or in a noncontact state such as a hovering.

The controller 110 includes a Central Processing Unit (CPU), a Read Only Memory (ROM) storing a control program for controlling the electronic device 100, and a Random Access Memory (RAM) used as a storage area for storing a signal or data input from the outside of the electronic device 100 or for work performed in the electronic device 100. The CPU may include a single core type CPU, or a multi-core type CPU such as a dual core type CPU, a triple core type CPU, and a quad core type CPU.

Further, the controller 110 controls at least one of the screen 120, the hovering recognition unit 121, the touch recognition unit 122, the screen controller 130, the communication unit 140, the multimedia unit 150, the electronic power supply unit 160, the storage unit 170, and the input/output unit 180.

When various objects and an input object are displayed on the screen 120, as various input units come close to any one of the objects, the controller 110 determines that a hovering of the input unit is recognized and identifies an object corresponding to a position at which the hovering is recognized. The object according to the embodiments of the present invention includes an object created by writing a note on the screen 120 with at least one input unit or finger. These objects may have a different layer from one another according to an input sequence, or may be displayed in an identical layer. Further, the controller 110 may detect a height from the electronic device 100 to the input unit, and a hovering input event according to the height, in which the hovering input event includes at least one of a press of a button formed in the input unit, a tap on the input unit, a movement of the input unit at a speed higher than a predetermined speed, and a touch on an object.

The controller 110 according to the embodiment of the present invention enables at least one input object to be displayed on the screen 120, creates and stores property information of at least one displayed object, creates a preview window in a region of the screen so as to display the at least one object on the preview window, and controls a display of the object by using the property information of the previewed object in correspondence to a selection of the at least one displayed object. The controller 110 receives inputs of the objects while giving a layer to each input object. The object may be a curved line or a region, of which a trace input by using at least one of the input unit and the finger is not broken. Further, the controller 110 creates and stores property information of at least one object displayed on the screen 120 in storage unit 170. The controller 110 analyzes the property of the at least one object input on the screen 120. The property includes at least one of an input time of the object, an input sequence of plural objects, information on at least one of an input unit and a finger with which the object is input, information on a user who inputs the object, and information on a text into which the input object is converted. The property also includes at least one of time information with relation to at least one of an input and an editing of the object, sequence information with relation to at least one of the input and the editing of the object, information on an input unit performing at least one of the input and the editing of the object, identification information of the user performing at least one of the input and the editing of the object, and information of the text into which the object is converted.

Furthermore, the controller 110 creates and displays the preview window, on which at least one object is displayed, in a region of the screen 120. The controller 110 creates the preview window on which at least one object similar to at least one object currently displayed is displayed, and displays the created preview window in a region of the screen 120. The preview window may be enlarged and reduced in size, or moved to a desired position corresponding to a user's input.

Further, the controller 110 selects at least one object displayed on at least one of the screen 120 and the preview window, and the controller 110 uses the property information of at least one selected object corresponding to the selection. The controller 110 controls the selected object, or provides a visual effect to the selected object. The controller 110 can display at least one object to which the visual effect is provided, on at least one of the screen and the preview window. When selecting at least one object displayed on at least one of the screen and the preview window, the controller 110 can provide the visual effect to the at least one selected object and display the selected object. Furthermore, the controller 110 can reproduce at least one selected object corresponding to an input time, or reproduce remaining objects except for at least one selected object. Moreover, when at least one object is selected, the controller 110 creates a progress bar including a time interval at which at least one selected object is reproduced, by using the property information of the selected object, and displays the created progress bar on the screen 120. The progress bar may include a time interval at which at least one object displayed on the screen is reproduced and a time interval at which at least one selected object is reproduced. Also, the controller 110 detects a point at which an input is received by the progress bar with relation to at least one displayed object, and reproduces the object corresponding to the detected point at the same time as the input. In addition, the controller 110 can create and display a preview image, which includes the object corresponding to the input point, on the screen 120.

Further, when at least two objects are selected, the controller 110 can reproduce an object selected corresponding to at least one of a time sequence, a recent input sequence, and a user's selection in which at least two objects are individually input. Furthermore, the controller 110 detects at least one of a touch or a hovering by the input unit, and a user's sight, and selects an object corresponding thereto. The controller 110 selects at least one object corresponding to at least one of a line and a region formed by a trace of the input unit. When it is determined that a hovering of the input unit is input, the controller 110 identifies a distance between the screen 120 and the input unit, and expands a region in order to select at least one object in proportion to the identified distance. Then, the controller 110 selects at least one object included in the expanded region.

The controller 110 according to a second embodiment of the present invention extracts property information of the at least one object displayed on the screen, displays at least one of information on a user and at least one input unit with which the at least one object is input by using the extracted property information, and reproduces at least one object corresponding to a selection of at least one of the user information and the at least one displayed input unit. The controller 110 extracts property information of at least one object displayed on the screen. The controller 110 analyzes a property of at least one object input to or displayed on the screen so as to create the property information or extracts the corresponding property information through the at least one object displayed on the screen. The property information includes at least one of time information with relation to at least one of an input and an editing of the object, sequence information with relation to at least one of the input and the editing of the object, information on an input unit performing at least one of the input and the editing of the object, identification information of the user performing at least one of the input and the editing of the object, and information of the text into which the object is converted.

Also, the controller 110 displays at least one of information on the user and the at least one input unit to input at least one object by using the extracted property information. The input unit includes at least one of a finger, an electronic pen, a digital type pen, a pen capable of performing a short-range communication, a joystick and a stylus pen which can input an object through at least one of a touch and a hovering on the screen 120, and operates in at least one mode of a fountain pen mode, a marker mode, and a pencil mode. At least one object corresponding to the selection may be displayed with a visual effect provided corresponding to a change to any one mode selected from various modes. The user information may include information on a user identifier through which a user creating each object displayed on the screen 120 is determined.

The controller 110 can reproduce at least one object corresponding to a selection of at least one of the user information and at least one input unit. The controller 110 can provide a visual effect to at least one object corresponding to the selection and display the object with a visual effect. Further, the controller 110 creates and displays a progress bar including a time interval at which at least one object corresponding to the selection is reproduced. Further, the controller 110 identifies an object which corresponds to an input point on the progress bar among one or more objects according to the selection, and reproduces at least one selected object on the screen 120 corresponding to a time at which the identified object is input. Further, when at least two objects are selected, the controller 110 can display an object selected corresponding to at least one of a time sequence, a recent input sequence, and a user's selection in which at least two objects are individually input, and receive an input of each object through a different layer. For at least these reasons, at least one object can be reproduced in sequence or reverse sequence in that the objects are input after a time at which each object is input is determined.

On the other hand, the screen 120 may receive at least one touch through a user's body, i.e. fingers including a thumb, or a touchable input unit, i.e. a stylus pen or an electronic pen Further, the screen 120 includes a hovering recognition unit 121 and a touch recognition unit 122 which can recognize an input by a pen according to an input mode, when an input is carried out by means of the pen such as a stylus pen or an electronic pen. The hovering recognition unit 121 recognizes a distance between the pen and the screen 120 by using a magnetic field, an ultrasonic wave, optical information or a surface acoustic wave, and the touch recognition unit 122 detects a position at which a touch is input, by using an electric charge moved by the touch. The touch recognition unit 122 can detect all touches capable of generating static electricity, and also may detect a touch of a finger or a pen which is an input unit. On the other hand, the screen 120 can receive an input of at least one gesture through at least one of touches and a hovering. The gesture includes at least one of a touch, a tap, a double tap, a flick, a drag, a drag and drop, a swipe, multi swipes, pinches, a touch and hold, a shake and a rotating. As known to one skilled in the art, the touch is a gesture in which an input unit is placed on the screen 120, the tap is a gesture in which the screen 120 is shortly and lightly tapped with the input unit, and the double tap is a gesture in which the screen 120 is quickly tapped twice. The flick is a gesture, i.e. scrolling, in which the input unit is quickly moved on and taken off the screen 120, and the drag is a gesture in which a displayed object is moved or scrolled on the screen 120, the drag and drop is a gesture in which an object is moved in a state of touching the screen 120 with an input unit, and the input unit is removed in a state that the movement of the object is stopped. Also, the swipe is a gesture in which the input unit is moved by a desired distance with a touch on the screen 120, the multi swipe is a gesture in which at least two input units (or fingers) move by a desired distance in a state of touching the screen 120, and the pinch is a gesture in which at least two input units (or fingers) individually move in different directions in a state of touching the screen. Further, the touch and hold is a gesture in which a touch or a hovering on the screen 120 is held until an object such as a help balloon is displayed, the shake is a gesture in which the electronic device is shaken in order to perform an operation, and the rotating is a gesture in which a direction of the screen 120 is converted from a portrait direction to a landscape direction, or from the landscape direction to the portrait direction. The gesture of the present invention may include a swipe using a hovering on the screen 120 and a flick using a hovering on the screen 120, in addition to the swipe in which the input unit is moved by the desired distance in the state of touching the screen 120 and the flick in which the input unit is quickly moved in the state of touching the screen 120. The present invention may be performed by using at least one gesture, and include a gesture by at least one of various touches and the hovering which the electronic device recognizes as well as the above mentioned gesture. Furthermore, the screen 120 transmits an analog signal corresponding to at least one gesture to the screen controller 130.

Moreover, in the various embodiments of the present invention, the touch is not limited to a contact of the touch screen 120 with the user's body or the touchable input means, and includes a noncontact, i.e. the user's body or the touchable input means approaching within a certain distance, but not touching, the touch screen 120. The distance which can be detected by the screen 120 may be changed according to a capability or a structure of the electronic device 100, and the touch screen 120 is configured to distinctively output a touch event by a contact with a user's body or a touchable input unit, and the non-contact touch input, i.e. a hovering event. In other words, the touch screen 120 recognizes values, i.e. analog values including a voltage value and an electric current value, detected through the touch event and the hovering event in order to distinguish the hovering event from the touch event. Further, the screen 120 differently outputs detected values, for example, a current value or the like, according to a distance between a space where the hovering event is generated and the screen 120.

The hovering recognition unit 121 or the touch recognition unit 122 may be implemented, for example by a resistive type, an electrostatic capacitive type, an infrared type, or an acoustic wave type of touch screen.

Further, the screen 120 may include two or more touch screen panels which can detect touches or approaches of the user's body and the touchable input unit respectively in order to sequentially or simultaneously receive inputs by the user's body and the touchable input unit. The two or more touch screen panels provide different output values to the screen controller, and the screen controller may differently recognize the values input into the two or more touch screen panels to distinguish whether the input from the screen 120 is an input by the user's body or an input by the touchable input unit. The screen 120 may display at least one object or input character string.

Particularly, the screen 120 has a structure in that a touch panel which detects an input by a finger or an input unit through a change of induced electromotive force is stacked on a panel which detects a touch of a finger or an input unit on the screen 120 by closely contacting each other or making them to be spaced from each other. The screen 120 has a plurality of pixels, and can display, through the pixels, an image or notes input by the input unit or the finger. A Liquid Crystal Display (LCD), an Organic Light Emitting Diode (OLED), or a Light Emitting Diode (LED) may be used as the screen 120

Further, the screen 120 may have a plurality of sensors for identifying a position of the finger or the input unit when the finger or the input unit touches or is spaced at a distance from a surface of the screen 120. The plural sensors are individually formed to have a coil structure, and a sensor layer including the plural sensors is formed so that each sensor has a predetermined patterns and a plurality of electrode lines is formed. The touch recognition unit 122 constructed as described above detects a signal of which a waveform is deformed due to electrostatic capacity between the sensor layer and the input means when the finger or the input unit touches the screen 120, and the screen 120 may transmit the detected signal to the controller 110. On the other hand, a distance between the input unit and the hovering recognition unit 121 can be known through intensity of a magnetic field created by the coil. The screen 120 having the structural characteristic determines an input position and an input time of at least one object which is input therein, creates a layer corresponding to the number of input objects, and allocates at least one object to each layer.

The touch screen controller 130 converts analog signals received from the touch screen 120 in which the characters are input into digital signals, i.e. X and Y coordinates, and then transmits the digital signals to the controller 110. The controller 110 controls the screen 120 by using the digital signal received from the screen controller 130. For example, the controller 110 may allow a short-cut icon (not shown) or an object displayed on the screen 120 to be selected or executed in response to a touch event or a hovering event. Further, the screen controller 130 may be included in the controller 110.

The touch screen controller 130 detects a value, i.e. an electric current value, output through the touch screen 120 and identifies a distance between the touch screen 120 and the space in which the hovering event is generated. Then, the touch screen controller 130 converts a value of the identified distance into a digital signal, i.e. a Z coordinate, and provides the controller 110 with the digital signal.

The communication unit 140 may include a mobile communication unit, a sub-communication unit, a wireless LAN (not shown), and a short-range communication unit, according to a communication scheme, a transmitting distance, and a sort of transmitted and received data. At least one object according to embodiments of the present invention may be received through the communication unit 140. The mobile communication unit allows the electronic device 100 to contact an external device by using one or more antennas under a control of the controller 110. The mobile communication unit may transmit/receive a wireless signal for voice communication, video communication, a Short Message Service (SMS), or a Multimedia Message Service (MMS) to/from a portable phone (not shown), a smart phone , a tablet PC, or another device (not shown), which has a phone number input to the electronic device 100. The sub-communication unit includes at least one of the wireless LAN unit and the short-range communication unit. For example, the sub-communication unit may include only the wireless LAN unit, or only the short-range communication unit, or both wireless LAN unit and the short-range communication unit. Further, the sub-communication unit may transmit and receive a control signal to/from the input unit. The control signal transmitted and received between the electronic device 100 and the input unit may include at least one of a field used for supplying electric power to the input unit, a field used for detecting a touch or a hovering of the input unit on the screen 120, a field used for detecting a press or an input of a button provided to the input unit, an identifier of the input unit, and a field indicating X-axis and Y-axis coordinates at which the input unit is located. Further, the input unit transmits a feedback signal for the control signal received from the electronic device 100 to the electronic device 100. The wireless LAN unit may access the Internet in a place where a wireless Access Point (AP) is installed, under a control of the controller 110. The wireless LAN unit supports the wireless LAN provision (IEEE802.11x) of the Institute of Electrical and Electronics Engineers (IEEE). The short-range communication unit wirelessly performs short-range communication between the electronic device 100 and an image forming device, under a control of the controller 110. A short-range communication scheme may include a Bluetooth communication scheme, an Infrared Data Association (IrDA) communication scheme, a WiFi-Direct communication scheme, a Near Field Communication (NFC) scheme, and the like.

The controller 110 can communicate with a communication device near or remote from the electronic device through at least one of the sub-communication unit and the wireless LAN unit, control to receive various data including an image, an emoticon, a photograph, and the like through the Internet, and communicate with the input unit. The communication may be achieved by a transmission and reception of the control signal.

The electronic device 100 may include at least one of the mobile communication unit, the wireless LAN unit, and the short-range communication unit according to its performance. The electronic device 100 may include a combination of the mobile communication unit, the wireless LAN unit, and the short-range communication unit according to its performance. In the various embodiments of the present disclosure, at least one of the mobile communication unit, the wireless LAN unit, the screen and the short-range communication unit, or a combination thereof is referred to as a transmission unit, and it does not limit the scope of the present disclosure.

The multimedia unit 150 includes a broadcasting and communication unit, an audio reproduction unit, or a video reproduction unit. The broadcasting and communication unit receives a broadcasting signal, i.e. a TV broadcasting signal, a radio broadcasting signal, or a data broadcasting signal, and broadcasting supplement information, i.e. Electric Program Guide (EPG) or Electric Service Guide (ESG), which are transmitted from a broadcasting station through a broadcasting and communication antenna (not shown), under a control of the controller 110. The audio reproduction unit reproduces digital audio files, i.e. files having an extension of mp3, wma, ogg, or wav, which are stored or received, under a control of the controller 110. The video reproduction unit reproduces a stored or received digital video file, i.e. files having an extension of mpeg, mpg, mp4, avi, mov, or mkv, under a control of the controller 110. The video reproduction unit reproduces the digital audio files. In addition, the video reproduction unit reproduces at least one object in sequence or reverse sequence of a time when the object is input. The multimedia unit 150 may have at least one of a module for reproducing at least one object, a program and an application.

The electric power supply unit 160 supplies electric power to one or more batteries arranged in the housing of the electronic device 100 under a control of the controller 110. The one or more batteries supply electric power to the electronic device 100. Further, the electric power supply unit 160 supplies electric power which is input from an external electric power source through a wired cable connected to the connector, to the electronic device 100. Furthermore, the electric power supply unit 160 supplies electric power, which is wirelessly input from the external electric power source through a wireless charging technology, to the electronic device 100.

The storage unit 170 stores signals or data input/output corresponding to the operation of the communication unit 140, the multimedia unit 150, the screen 120, and the input/output unit 180, under a control of the controller 110. The storage unit 170 stores a control program and applications for controlling the electronic device 100 or the controller 110. Further, the storage unit 170 stores at least one object and property information created through each object, and also stores at least one object received through the communication unit 140 and property information corresponding to the object. Furthermore, the storage unit 170 stores at least one program capable of reproducing at least one object.

The storage unit 170 may include a nonvolatile memory, a volatile memory, a Hard Disk Drive (HDD), or a Solid State Drive (SSD).

Moreover, the storage unit 170 stores at least one of a character, a word, and a character string which are input to the screen 120, and also stores various data such as a text, an image, an emoticon, an icon and the like, which a user receives through the Internet. Furthermore, the storage unit 170 stores applications such as a navigation application, a video call application, a game application, an alarm application for providing an alarm to a user, based on time, images for providing a Graphical User Interface (GUI) relating to the applications, databases or data relating to a method of processing user information, a document and a touch input, background images, i.e. a menu screen, a standby screen, and the like, or operation programs, necessary for an operation of the electronic device 100, images taken by the camera module (not shown), and the like. The storage unit 170 is a medium which is read by a machine, i.e. computer. The term "machine-readable medium" may be defined as a medium capable of providing data to the machine so that the machine performs a specific function. The machine-readable medium may be a storage medium. The storage unit 170 may include a non-volatile medium and a volatile medium. All media should be a type in which the instructions transmitted by the media can be detected by a physical mechanism in which the machine is capable of reading the instructions.

The input/output unit 180 includes at least one of plural buttons, a microphone, a speaker, a vibration motor, a connector, a keypad, an earphone connection jack, and an input unit 200. Further, the input/output unit 180 may include at least one screen 120. The input/output unit 180 is not limited to those described above, and may include a cursor controller, such as a mouse, a trackball, a joystick and cursor directional keys, in order to control movement of a cursor on the screen 120 through the communication with the controller 110. In the input/output unit 180, the speaker outputs a sound corresponding to a control for at least one object displayed on the screen 120, and the vibration motor also outputs a vibration corresponding to a control for at least one object displayed on the screen 120.

FIG. 2 is a schematic view illustrating the input unit and the screen according to embodiments of the present invention.

As shown in FIG. 2, the screen 120 according to the first embodiment of the present invention includes at least one of a touch recognition panel 220, a display panel 230 and a hovering recognition panel 240. The display panel 230 may be one of a Liquid Crystal Display (LCD) panel, an Active Matrix Organic Light Emitting Diode (AMOLED), and the like, and display various images and at least one object depending on various operation states of the electronic device 100, results from the operation states, an execution of an application, a service and the like.

The touch recognition panel 220 is an electrostatic capacitive type touch panel, in which metal conductive materials, i.e. Indium Tin Oxide (ITO), are thinly coated on both surfaces of glass so as to allow electric current to flow, and a dielectric for storing electric charges is coated thereon. When a user's finger or the input unit 200 touches the surface of the touch recognition panel 220, a desired amount of electric charges is moved by static electricity to a position at which the touch is achieved, and the touch recognition panel 220 recognizes a change of electric current according to the movement of the electric charges, so as to detect the position at which the touch is achieved. The touch recognition panel 220 can detect a gesture performed by at least one of a swipe in which the finger or the input unit moves by a desired distance in the state of touching the panel, and a flick in which the finger or the input unit quickly moves in the state of touching the panel and is taken off. Further, the touch recognition panel 220 can detect all kinds of touches and gestures capable of inducing static electricity, including a swipe and a flick.

The hovering recognition panel 240 is an Electronic Magnetic Resonance (EMR) type touch panel, which includes an electronic induction coil sensor having a grid structure including a plurality of loop coils arranged in a predetermined first direction and a second direction crossing the first direction, and an electronic signal processor for sequentially providing an Alternate Current (AC) signal having a predetermined frequency to each loop coil of the electronic induction coil sensor. If the input device 200 in which a resonance circuit is embedded, is present near a loop coil of the hovering touch panel 240, a magnetic field transmitted from a corresponding loop coil causes electric current in the resonance circuit in the input device 200, based on a mutual electronic induction. Accordingly, an induction magnetic field is created from a coil constituting the resonance circuit in the input unit 200 based on the electric current, and the hovering recognition panel 240 detects the induction magnetic field from the loop coil while receiving signals so as to sense a hovering position or a touch position of the input unit 200. Also, the electronic device 100 senses a height h from the touch recognition panel 220 to a nib 210 of the input unit 200. It will be easily understood by those skilled in the art that the height h from the touch recognition panel 220 of the screen 120 to the nib 210 is changed in correspondence to a performance or a structure of the electronic device 100. If the input unit 200 generates electric current based on electromagnetic induction, the hovering recognition panel 240 senses a hovering and a touch of the input unit. Accordingly, the hovering recognition panel 240 is exclusively used for sensing the hovering or the touch of the input unit 200. The input unit 200 may an electromagnetic pen or an EMR pen. Further, the input unit 200 may be different from a general pen which has no resonance circuit, a signal of which is detected by the touch recognition panel 220. The input unit 200may include a button capable of varying a value of electromagnetic induction generated by a coil that is disposed near the nib 210.

The screen controller 130 includes a touch recognition controller and a hovering recognition controller. The touch recognition controller receives and converts analog signals that the touch recognition panel 220 senses from an input of a finger or an input unit, into digital signals, i.e. X, Y and Z coordinates, and transmits the digital signals to the controller 110. The hovering recognition controller receives and converts analog signals that the hovering recognition panel 240 senses from a hovering input of a finger or an input unit 200, into digital signals, and transmits the digital signals to the controller 110. The controller 110 controls the touch recognition panel 220, the display panel 230, and the hovering recognition panel 260 by using the digital signals received from the touch recognition controller and the hovering recognition controller respectively. For example, the controller 110 may display a shape in a predetermined form on the display panel 230 in response to the hovering event or the touch of the finger, or the input unit 200.

Accordingly, in the electronic device 100 according to the first embodiment of the present invention, the touch recognition panel senses the touch of the user's finger or the input unit 200, and the hovering recognition panel also senses the hovering of the input unit 200 or the finger. Further, in the electronic device 100 according to the first embodiment of the present disclosure, the touch recognition panel may sense the touch of the user's finger or the pen, and the hovering recognition panel also may sense the hovering of the input unit 200 and the finger. However, the structure of each panel may be modified in design. The controller 110 of the electronic device 100 can distinctively sense the touch or hovering of the user's finger or the pen, or the touch or hovering of the input unit 200. Although FIG. 2 merely shows one screen, the present invention is not limited to only one screen and may have a plurality of screens, which can sense at least one of the touch and hovering as described above. Moreover, the screens may be included in the housings respectively, and connected with each other by hinges, or one housing may include a plurality of screens. As shown in FIG. 2, the plurality of screens may include a display panel and at least one touch recognition panel.

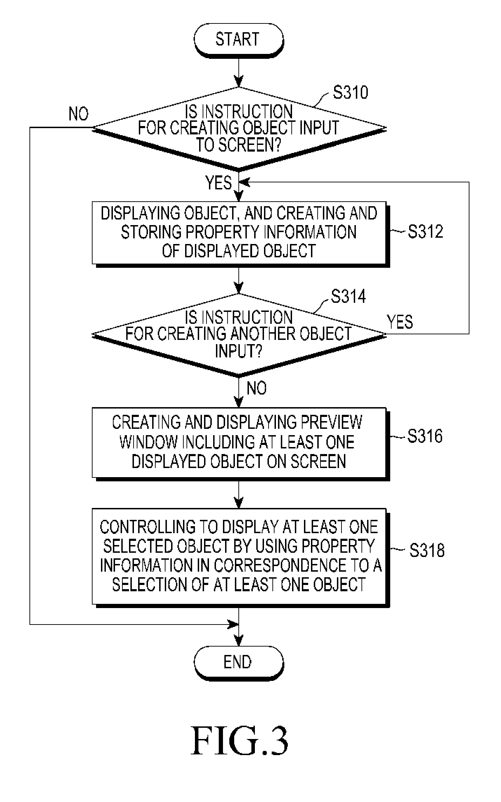

FIG. 3 is a flowchart illustrating a process of controlling to display an object of an electronic device according to the first embodiment of the present invention.

When an instruction of creating an object is input in the screen in step S310, the electronic device 100 displays the object on the screen 120, and creates and generates property information of the displayed object in step S312. The controller 100 controls the screen 120 to display at least one object displayed thereon. The electronic device 100 may receive inputs of the objects while giving a layer to each input object. The object may be a curved line or a region, of which a trace input by using at least one of the input unit and the finger is not broken. A user can draw a picture by using at least one object. Further, the electronic device 100 can store property information of at least one object displayed on the screen 120, and analyze the property of the at least one object input into the screen 120. The property may include at least one of an input time of the object, an input sequence of plural objects, information on at least one of an input unit and a finger with which the object is input, information on a user who inputs the object, and information on a text into which the input object is converted.

The electronic device 100 analyzes the property, and creates and stores the property information in the storage unit 170. The property information includes at least one of time information with relation to at least one of an input and an editing correction of the object, sequence information with relation to at least one of the input and the editing of the object, information on an input unit performing at least one of the input and the editing of the object, identification information of the user performing at least one of the input and the editing of the object, and information of the text into which the object is converted.

The time information includes information on the time at which the object is created or edited, and it is possible to reproduce or search for the object based on the time information.

The sequence information indicates the sequence of the object, and the sequence of the objects may be determined as to which one is positioned at an uppermost layer and one is positioned at a lowermost layer. The sequence information is stored when each object is created or edited, and the object may be reproduced and searched for based on the sequence information.

The input unit information includes information on the input unit used to create or edit the object. For example, the input unit information may include information on a type of an input such as a touch input and a hovering input, and also may include property information of the input unit such as color information, thickness information, brush information and the like, of the input unit. At least one object may be reproduced or searched for based on the input unit information.

The identification information includes information on a user who creates or edits the object. The contents may include at least one object, in which the object is created in one electronic device or plural electronic devices. Further, one content including the object may be created or edited by plural users, and the object may be reproduced or searched for based on the contents. Further, the identification information may include text information obtained when the objects are created or edited. The user directly inputs a text, or the controller 110 may recognize and automatically obtain the text. The object may be reproduced or searched for based on the text.

When an instruction is input in order to create another object in step S314, the process returns to step S312. Steps 5310, S312 and S314 may be repeatedly carried out corresponding to the number of the input objects. If the instruction to create another object is not input in step S314, a preview window including at least one displayed object is created and displayed on the screen 120 in step S316. The electronic device 100 creates the preview window on which at least one object similar to at least one other object currently displayed is displayed, and displays the created preview window in a region of the screen 120. The preview window corresponds to a display of at least one object input into the screen 120, or may be displayed when an input of the object is completed, for example at a time point when an input of an object into the screen 120 is completed by analyzing an initial input point and time and a final input point and time. The preview window may be enlarged or reduced in size, and/or moved to a position in correspondence to a user's input.

The stored property information is extracted corresponding to at least one object selection, and a display of at least one selected object is controlled by using the extracted property information in step S318. The electronic device 100 detects at least one of a touch or a hovering by the input unit, and sensing of a user's sight. The electronic device of the present invention senses "user's sight" by using a camera. So, At least one of object may be selected by sight of user. and selects an object corresponding thereto. The controller 110 selects at least one object corresponding to at least one of a line and a region formed by a trace of the input unit. When it is determined that a hovering of the input unit is input, the electronic device 100 identifies a distance between the screen 120 and the input unit, and expands a region to select at least one object in proportion to the identified distance. Then, the electronic device 100 selects at least one object included in the expanded region. Further, when at least one object is selected through at least one of the screen and the preview window, the electronic device 100 extracts the property information corresponding to at least one selected object. The electronic device 100 may control at least one of a reproduction and a display of the at least one selected object by using the extracted property information. The property information may include at least one of time information with relation to at least one of an input and an editing of the object, sequence information with relation to at least one of the input and the editing of the object, information on an input unit performing at least one of the input and the editing of the object, identification information of the user performing at least one of the input and the editing of the object, and information of the text into which the object is converted. Furthermore, the electronic device 100 can reproduce at least one selected object corresponding to an input time, or reproduce remaining objects except for the at least one selected object. Moreover, when at least one object is selected, the electronic device 100 creates a progress bar including a time interval at which the at least one selected object is reproduced, by using the property information of the selected object, and displays the created progress bar on the screen 120. The progress bar may include a time interval at which at least one object displayed on the screen is reproduced and a time interval at which the at least one selected object is reproduced. Also, the electronic device 100 detects a point of the progress bar in which an input is received with relation to at least one displayed object, and reproduces the object corresponding to the detected point at the same time as the input. In addition, the electronic device 100 can create and display a preview image, which includes the object corresponding to the input point, on the screen 120. Further, in the case that at least two objects are selected, the electronic device 100 can reproduce an object selected corresponding to at least one of a time sequence, a recent input sequence, and a user's selection in which at least two objects are individually input.

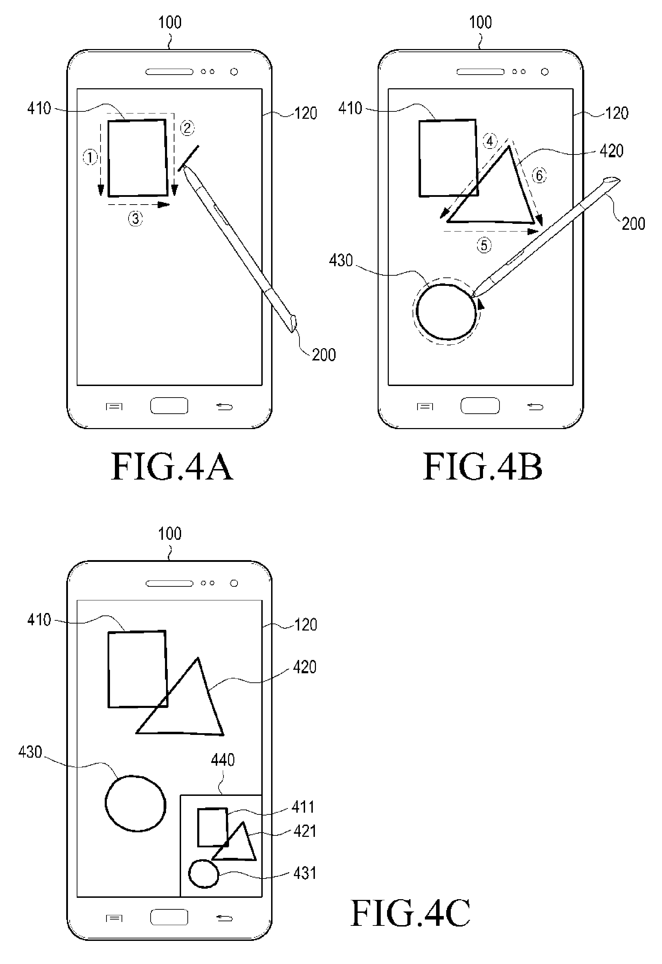

Referring to FIG. 4, FIG. 4A is a screen view illustrating a process of inputting a square shaped object into the screen, FIG. 4B is a screen view illustrating a process of inputting a triangular shaped object into the screen, and FIG. 4C is a screen view illustrating a process of inputting a circular shaped object into the screen, according to the first embodiment of the present invention.

The object according to the first embodiment of the present invention includes a line, a curved line, a point, a color, a character, a word, a picture and the like, which may be input in and displayed on the screen 120.

Referring to FIG. 4A, a first object 410 is input into the screen 120 of the electronic device 100. The first object, i.e. the square shaped object, is input in a sequence such that a first line ① is first input, a second line ② is input after the first line ①, and a third line ③ is finally input. Each line may be input at a different time, and drawn in a progressing direction of the input unit 200 or by a trace of the input unit 200.

Referring to FIG. 4B, the electronic device 100 has the first object 410, a second object 420, and a third object 430 which are input into and displayed on the screen 120 thereof. The second object 420 is input in a sequence such that a first line ④ is first input, a second line ⑤ is input after the first line ④, and a third line ⑥ is finally input. Further, the second object 420 may be drawn and displayed to overlay the first object 410. On the other hand, the third object 430 may be drawn by a single line. Each object may be changed in size or shape according to a drawing capability of a user. Each object may be distinguished by a looped curve or one stroke, and a layer may be allocated to each object according to the looped curve or the stroke. For example, each layer may be allocated to one stroke or one object. The electronic device 100 detects inputs to draw each object so as to allocate layers to the inputs respectively, and analyzes information on a time and an input unit with which each looped curve or stroke is drawn, so as to create property information.

Referring to FIG. 4C, the electronic device 100 displays at least one object which is input through the input unit 200, on the screen 120. Further, the electronic device 100 may create and display a preview window 440 including the at least one object input into the screen 120, in a region of the screen 120. The objects displayed on the preview window 440 have a similar shape to that displayed on the screen 120. As shown in FIGS. 4A, 4B and 4C, the first, second and third objects 410, 420 and 430 are displayed on the screen 120, and fourth, fifth and sixth objects 411, 421 and 431 corresponding to the first, second and third objects 410, 420 and 430, respectively, are displayed on the preview window 440. At least one object included in the preview window 440 may be displayed in the same color as the corresponding object displayed on the screen 120, or may be displayed in a predetermined color.

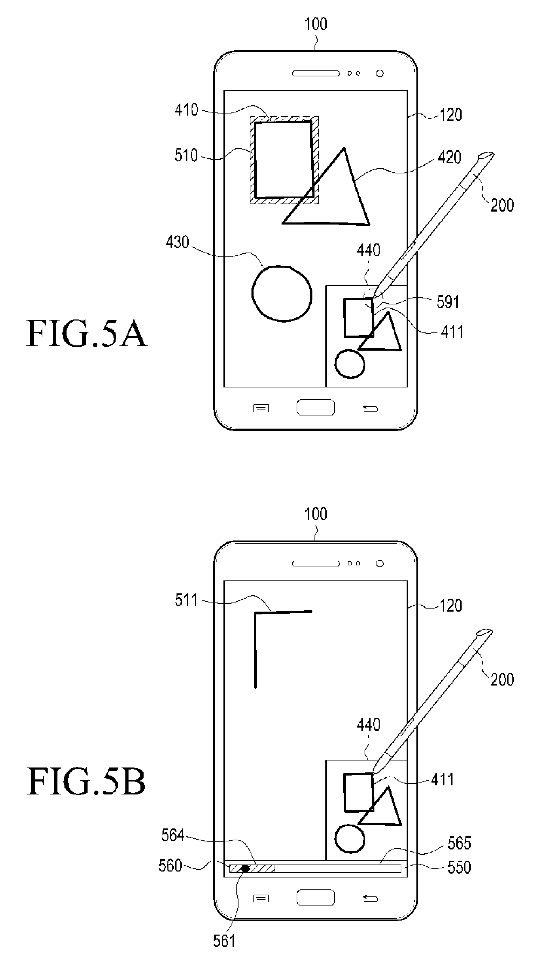

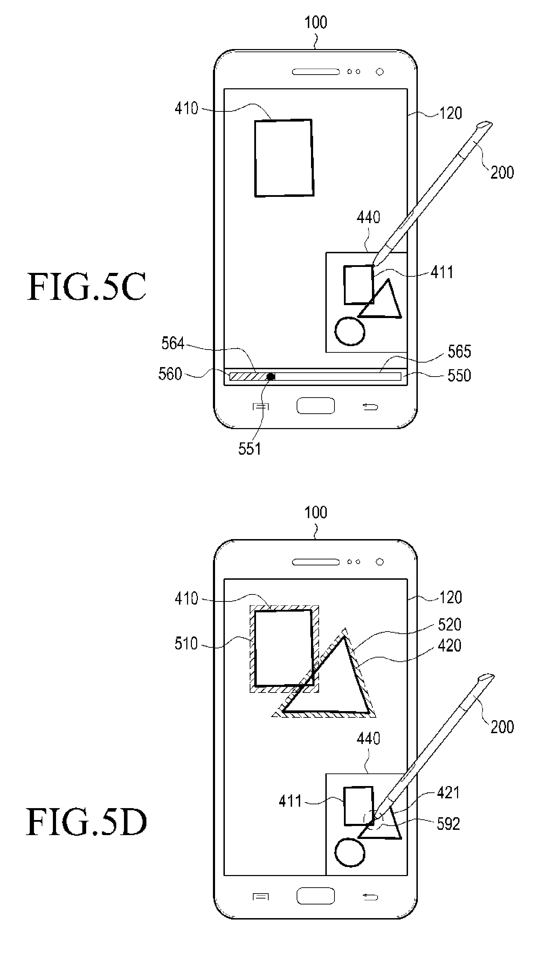

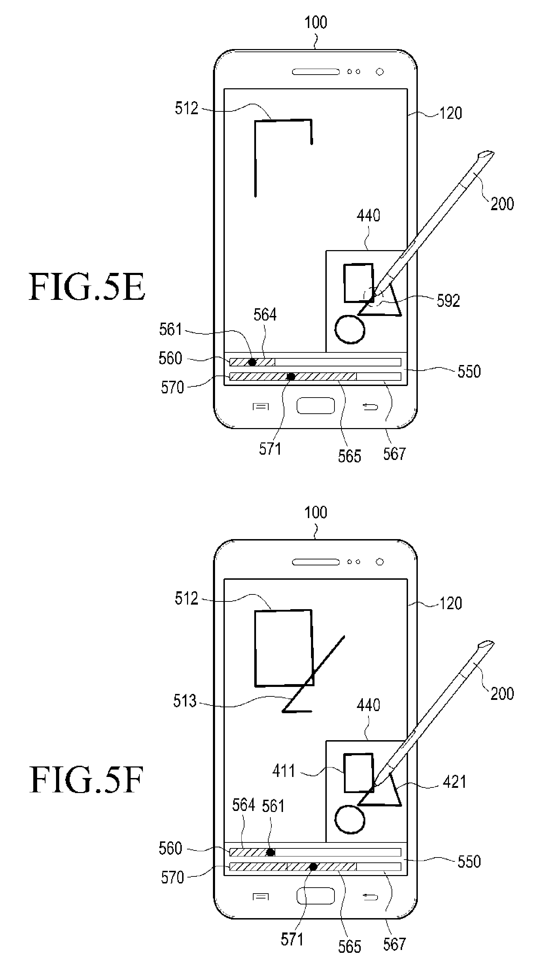

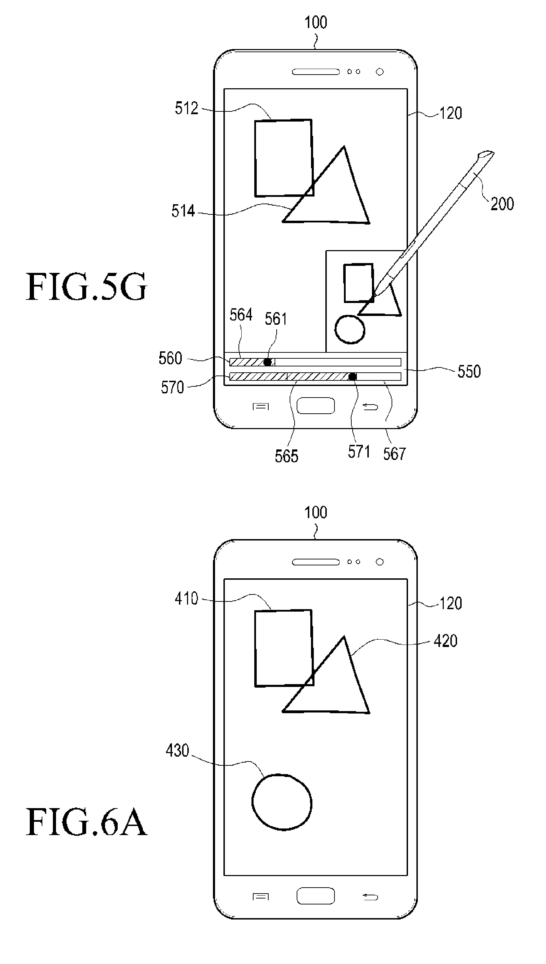

Referring to FIG. 5, FIG. 5A is a screen view illustrating a process of displaying a corresponding object corresponding to a selection of the object displayed on the preview window,. FIG. 5B is a screen view illustrating a process of controlling a corresponding object corresponding to a selection of the object displayed on the preview window,. FIG. 5C is a screen view illustrating completion of reproducing a corresponding object corresponding to a selection of the object displayed on the preview window, FIG. 5D is a screen view illustrating a process of displaying at least two objects corresponding to a selection of at least two objects displayed on the preview window, FIG. 5E is a screen view illustrating a process of reproducing at least two corresponding objects corresponding to a selection of at least two objects displayed on the preview window, FIG. 5F is a screen view illustrating a process of reproducing at least two corresponding objects corresponding to a selection of at least two objects displayed on the preview window, and FIG. 5G is a screen view illustrating completion of reproducing at least two corresponding objects corresponding to a selection of at least two objects displayed on the preview window, according to the first embodiment of the present disclosure.

Referring to FIGS. 5A to 5C, when any one object 411 included in the preview window 440 is selected by using an input unit 200, the first object 410 which is displayed on the screen 120 and corresponds to the selected object 411 is displayed with a visual effect 510 indicating that it is selected by a user. Such a visual effect may include various effects such as a shadow effect, a color change, activation and the like, and also may include various effects through which a user may recognize that the visual effect is provided to the object 410 before and after selecting the object 411. As shown in FIG. 5B, as the property of the first object 410 is analyzed, the object may be displayed in sequence of time at which the first object 410 is input. For example, the first object 410 may be a square shaped object formed by four lines, and may be reproduced again at the same time as each line 511 is input. Further, the screen 120 may include and display a region 550 to display a progress bar 560 which shows a total time taken to input at least one object therein. The progress bar 560 corresponding to the first object 410 is a first time interval 564 for a total time taken to input the first object 410. A second time interval 565 indicates a total time taken to input a second object 420 and a third object 430. Furthermore, the first time interval 564 may be activated, and the second time interval 565 may be deactivated. A point 561 of the first time interval 564 is movable to the left and right, and a line 511 of the first object 410 is controlled to be displayed corresponding to the movement of the point to the left and right. As described above, the reason for controlling the display of the line 511 of the first object 410 is because the controller 110 can analyze property information including a time when the first object 410 is input. Referring to FIG. 5C, when the object 410 is selected in the preview window 440 by using the input unit 200, the reproduction of the first object 410 may be carried out as shown in FIGS. 5B and 5C. It is understood that a position of a point 551 in FIG. 5C is different from the position of the point 561 in FIG. 5B. The position of the point indicates a completion ratio in which the reproduction of the corresponding object is being completed. In FIG. 5B, since the first object is reproduced, the corresponding point 561 is present in the first time interval 564 in proportion to a reproduction ratio of the first object which is reproduced. However, when the reproduction of the first object is completed, the corresponding point 551 is positioned at a rightmost region of the first time interval 564.

Referring to FIGS. 5D to 5G, when at least two objects 411 and 421 included in the preview window 440 are selected by using an input unit 200, the first object 410 and the second object 420 which are displayed on the screen 120 and correspond to the at least two selected objects 411 and 421 are displayed with visual effects 510 and 520 indicating that they are selected by a user, as described above. Such visual effects may include various effects such as a shadow effect, a color change, activation and the like, and also may include various effects through which a user may recognize that the visual effects are provided to the at least two objects 410 and 420 before and after selecting the at least two objects 411 and 421. In the case that a hovering is input by using the input unit 200, the controller 110 detects the input of the hovering and determines a distance between the screen 120 and the input unit 200 so as to form a hovering region 592. A size of the hovering region adjusts according to the distance. For example, if the distance is longer, the size is larger. However, if the distance is shorter, the size is smaller. The controller 110 determines that at least one object included in the hovering region is selected. Further, the controller 110 provides the visual effect to the hovering region and allows the user to recognize that the hovering region is formed. As shown in FIG. 5E, the controller analyzes properties of at the least two objects 410 and 420, and enables the corresponding objects to be displayed in sequence of time when the objects 410 and 420 are input. For example, the first object 410 may be a square shaped object formed by four lines, and may be reproduced again at the same time as the lines 512 are input. On the other hand, the second object 420 may be a triangle shaped object formed by three lines 513. If the second object 420 is input after the first object 410 is input, as shown in FIG. 5E, the line 512 constituting the first object is reproduced so as to form the first object 410, and then the line 513 constituting the second object is reproduced so as to form the second object 420. The third object 430 is not reproduced since it is not included in the region 592.

Further, the screen 120 may include and display a region 550 to display a progress bar which indicates a total time taken to input at least one object therein. In the region 550, the progress bar corresponding to the at least one object is displayed. The region 550 of FIG. 5E includes a progress bar 560 corresponding to the first object 410 and a progress bar 570 corresponding to the second object 420. The first time interval 564 indicates a total time taken to input the first object 410, the second time interval 565 indicates a total time taken to input the second object 420, and the third time interval 567 indicates a total time taken to input the third object 430. The region 550 may include a progress bar corresponding to at least one object to be displayed on the screen 120. In the first progress bar 560, the first time interval 564 may be activated while the second time interval 565 and the third time interval 567 may be deactivated. In the second progress bar 570, the second time interval 565 may be activated while the first time interval 564 and the third time interval 567 may be deactivated. The point 561 of the first time interval 564 and the point 571 of the second time interval 565 are movable to the left and right, and the line of the corresponding object corresponding to the movement of the points to the left and right may be displayed. As described above, the reason for controlling the display of the lines 511 and 512 of the first object 410 and the line 513 of the second object 420 is because the controller 110 can analyze property information including a time when the first object 410 and the second object 420 are input. Referring to FIG. 5G, when the first object 410 and the second object 420 are selected from the preview window 440 by using the input unit 200, the first object 410 and the second object 420 are reproduced as shown in FIGS. 5E and 5F. It is understood that positions of points 561 and 571 in FIG. 5G are different from the positions of the points 561 and 571 in FIG. 5E. The position of the point indicates a completion ratio in which the reproduction of the corresponding object is completed. In FIG. 5E and FIG. 5F, as the first object 410 and the second object 420 are being reproduced, the corresponding points 561 and 571 are present in the first time interval 564 or the second time interval 565 in proportion to a reproduction ratio of the first object and the second object to be reproduced. However, when the reproduction of the first object is completed, the corresponding point 561 is located at the rightmost position of the first time interval 564. Further, when the reproduction of the second object is completed, the corresponding point 571 is located at the rightmost position of the second time interval 565.

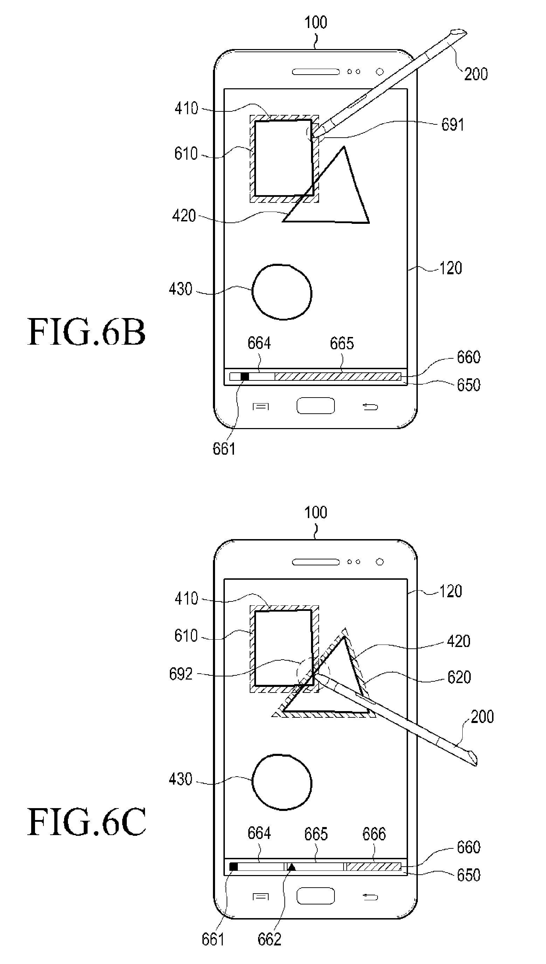

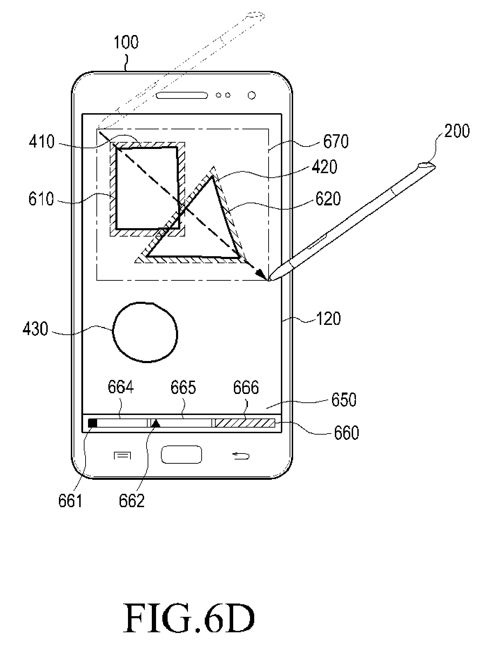

Referring to FIG. 6, FIG. 6A is a screen view illustrating at least one object displayed on a screen according to a second embodiment of the present invention, FIG. 6B is a screen view illustrating a corresponding object displayed corresponding to a selection of an object displayed on the screen according to the second embodiment of the present invention, in which the displaying of the corresponding object is controlled, FIG. 6C is a screen view illustrating at least two objects displayed corresponding to a selection of an object displayed on the screen according to the second embodiment of the present invention, in which the displaying of the two objects are controlled, and FIG. 6D is a screen view illustrating a selection of at least one object displayed on the screen according to the second embodiment of the present invention.

In the state in which one or more objects 410, 420 and 430 are displayed on the screen 120 as shown in FIGS. 6A and 6B, any one object 410 may be selected corresponding to at least one of the touch input and the hovering input by using the input unit 200 as shown in FIG. 6B. The controller 110 forms a region 691 according to a hovering input when detecting the hovering input caused by the input unit 200. The region 691 is formed in order to select at least one object. The controller 110 provides a visual effect 610 to the first object 410 corresponding to the detected point when detecting at least one of the touch input and the hovering input. The visual effect includes a shadow effect, a color change, activation and the like, and furthermore includes various effects which allow the user to recognize that the object 410 is selected. Further, the screen 120 includes and displays a region 650 to display a progress bar 660 which indicates a total time taken to input at least one object therein. In the progress bar 660 corresponding to the first object 410, a first time interval 664 denotes a total time taken to input the first object 410. A second time interval 665 indicates a total time taken to input a second object 420 and a third object 430. Furthermore, the first time interval 664 may be activated, and the second time interval 665 may be deactivated. A point 661 of the first time interval 664 is movable to the left and right, and the first object 410 is controlled to be displayed corresponding to the movement of the point 661 to the left and right. Further, the point 661 may be expressed in a corresponding object shape. The first point 661 corresponding to the first object 410 has a square shape.

Referring to FIG. 6C, at least two objects 410 and 420 may be selected corresponding to at least one of the touch input and the hovering input implemented by the input unit 200. The controller 110 forms a region 692 according to a hovering input when detecting the hovering input implemented by the input unit 200. The region 692 is formed in order to select at least one object. The user may not see the region formed by the hovering, a size of which is adjusted in proportion to a height from the screen 120 to the input unit 200. The controller 110 provides a visual effect 610 to the first object 410 corresponding to the detected point and provides a visual effect 620 to the second object 420, when detecting at least one of the touch input and the hovering input. The visual effect includes a shadow effect, a color change, activation and the like, and furthermore includes various effects which allow the user to recognize that the first object 410 and the second object 420 are selected. That is, various effects are provided so that the user can recognize the visual effects are provided to the first object 410 and the second object 420 before and after the first and second objects 410 and 420 are selected. Further, the screen 120 includes and displays a region 650 to display a progress bar 660 which indicates a total time taken to input at least one object therein. For example, as shown in FIG. 6C, when two objects are selected, the region 650 displays one progress bar in which a time interval indicating a total time taken to input each object displayed on the screen is set and displayed. In the progress bar 660, a first time interval 664 indicates a total time taken to input the first object 410, and a second time interval 665 denotes a total time taken to input the second object 420. Further, a third time interval 666 indicates a total time taken to input a third object 430 which is not selected. The first time interval 664 and the second time interval 665 may be activated, and the third time interval 666 may be deactivated because it is not selected. The first point 661 of the first time interval 664 and the second point 662 of the second time interval 665 are movable to the left and right, and the display of the first object 410 and the second object 420 is controlled corresponding to the movement of the first and second points 661 and 662 to the left and right. Further, the first point 661 corresponding to the first object 410 may be expressed in a square shape because the first object 410 has a square shape. Similarly, the second point 662 corresponding to the second object 420 may be expressed in a triangular shape because the second object 420 has a triangular shape.

Referring to FIG. 6D, in the state that the input unit 200 maintains a touch or a hovering on the screen 120, at least one object displayed on the screen may be selected through a drag or a gesture of the input unit 200. The drag or the gesture may be achieved in a curved line or a specific region 670. When the first and second objects 410 and 420 are selected through the drag or the gesture, the visual effects 610 and 620 are provided to the selected first and second objects 410 and 420, respectively. Further, the screen 120 includes and displays a region 650 to display a progress bar 660 which indicates a total time taken to input the selected object therein. In the progress bar, a first time interval 664 indicates a total time taken to input the first object 410, and a second time interval 665 denotes a total time taken to input the second object 420. Further, a third time interval 666 indicates a total time taken to input a third object 430 which is not selected. The first time interval 664 and the second time interval 665 may be activated, and the third time interval 666 may be deactivated because it is not selected. The first point 661 of the first time interval 664 and the second point 662 of the second time interval 665 are movable to the left and right, and the display of the first object 410 and the second object 420 is controlled corresponding to the movement of the first and second points 661 and 662 to the left and right. Further, the first point 661 corresponding to the first object 410 may be expressed in a square shape because the first object 410 has a square shape. Similarly, the second point 662 corresponding to the second object 420 may be expressed in a triangular shape because the second object 420 has a triangular shape. [

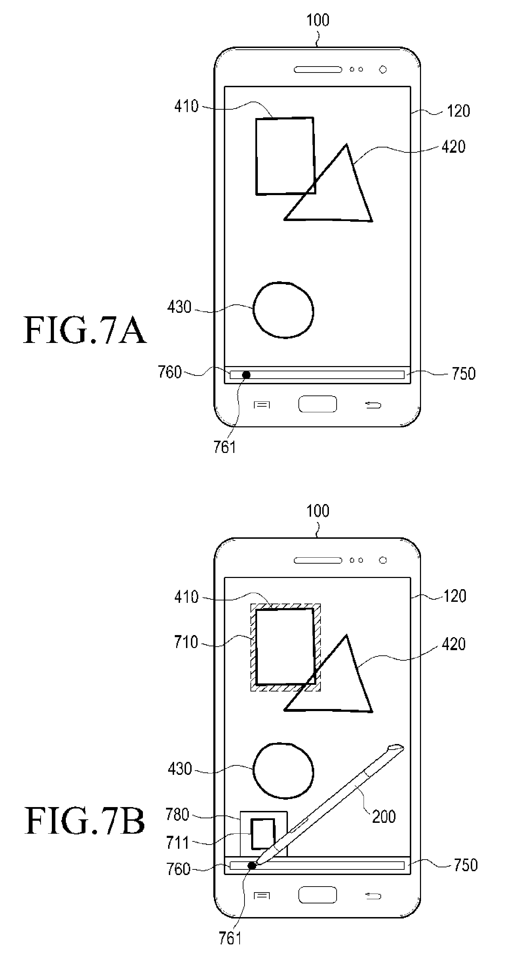

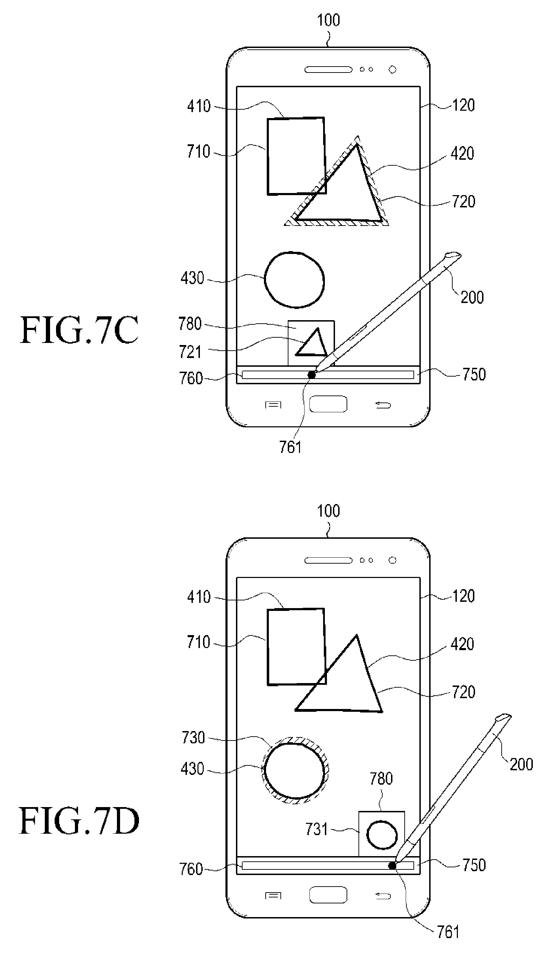

Referring to FIG. 7, FIG. 7A is a screen view illustrating at least one object displayed on the screen according to a third embodiment of the present invention, FIG. 7B is a screen view illustrating a process of controlling a display corresponding to a controlling of a progress bar displayed on the screen according to the third embodiment of the present invention, FIG. 7C is a view illustrating a process of controlling a display corresponding to the controlling of the progress bar displayed on the screen according to the third embodiment of the present invention, and FIG. 7D is a screen view illustrating a process of controlling a display corresponding to the controlling of the progress bar displayed on the screen according to the third embodiment of the present invention.

Referring to FIG. 7A, one or more objects 410, 420 and 430 are displayed on the screen 120. Further, the screen 120 includes a region 750 to display the progress bar 760. The progress bar 760 indicates a total time taken to input all displayed objects, or a time taken to reproduce all objects. The region 750 includes the progress bar 760 for displaying a time taken to reproduce at least one object displayed on the screen, or a reproduction ratio of the object. The point 761 of the progress bar 760 may be moved to the left and right as at least one object is reproduced. Referring to FIG. 7B, in the state in which the first, second and third objects 410, 420 and 430 are displayed on the screen 120, when a position of the point 761 is changed by using the input unit 200, the controller 110 provides the visual effect 710 to the object 410 corresponding to the changed position of the point 761. The visual effect 710 includes a shadow effect, a color change, activation and the like, and furthermore the various effects are provided so that the user may recognize that the current position of the point 761 is a time interval in which the first object 410 can be reproduced. The controller 110 analyzes time information of the changed position to which the point 761 moves, and distinguishes the object corresponding to the analyzed time information from the objects. Further, the controller 110 makes an object having the same shape as the distinguished object to be included and displayed in the preview image. The controller 110 creates a preview image 780 corresponding to the object 711 which has the changed position, and displays the preview image 780 above the point 761. For example, when the point is moved from the position of FIG. 7A to the position of FIG. 7B by the touch input or the hovering input of the input unit 200 or the user's finger, the controller 110 analyzes time information of the changed position and distinguishes the object corresponding to the time information so as to create the preview image of the object. In the case that an object has a square shape at a position to which the point 761 is moved, the controller 110 displays the square shaped object in the preview image 780. The preview image 780 may be changed by at least one of the movement of the point and the adjustment of a size thereof.

Referring to FIG. 7C, in the state that the first, second and third objects 410, 420 and 430 are displayed on the screen 120, when the point 761 is moved to the right from the position shown in FIG. 7B by using the input unit 200, the controller 110 provides the visual effect 720 to the object 420 corresponding to the changed position. The visual effect 720 includes a shadow effect, a color change, activation and the like, and furthermore includes the various effects through which the user may recognize that the current position of the point 761 is a time interval in which the first object 420 can be reproduced. The controller 110 analyzes time information of the changed position to which the point 761 moves, and distinguishes the object corresponding to the analyzed time information from the objects. Further, the controller 110 makes an object having the same shape as the distinguished object to be included and displayed in the preview image. The controller 110 creates a preview image 780 corresponding to the object 721 which has the changed position, and displays the preview image 780 above the point 761. For example, when the point is moved from the position of FIG. 7A to the position of FIG. 7C by the touch input or the hovering input of the input unit 200 or the user's finger, the controller 110 analyzes time information of the changed position and distinguishes the object corresponding to the time information so as to create the preview image of the object. In the case that an object has a triangular shape at a position to which the point 761 is moved, the controller 110 displays the triangular shaped object in the form of the preview image 780. The preview image 780 may be changed by at least one of the movement of the point and the adjustment of a size thereof.

Referring to FIG. 7D, in the state that the first, second and third objects 410, 420 and 430 are displayed on the screen 120, when the point 761 is moved to the right from the position shown in FIG. 7C by using the input unit 200, the controller 110 provides the visual effect 730 to the object 430 corresponding to the changed position. The visual effect 730 includes a shadow effect, a color change, activation and the like, and furthermore includes the various effects through which the user may recognize that the current position of the point 761 is a time interval in which the first object 430 can be reproduced. The controller 110 analyzes time information of the changed position to which the point 761 moves, and distinguishes the object corresponding to the analyzed time information from the objects. Further, the controller 110 makes an object having the same shape as the distinguished object to be displayed in the form of the preview image. The controller 110 creates a preview image 780 of the object 731 corresponding to the changed position, and displays the preview image 780 above the point 761. For example, when the point is moved from the position of FIG. 7A to the position of FIG. 7D by the touch input or the hovering input of the input unit 200 or the finger, the controller 110 analyzes time information of the changed position and distinguishes the object corresponding to the time information so as to create the preview image of the object. In the case that an object has a circular shape at a position to which the point 761 is moved, the controller 110 displays the circular shaped object in the form of the preview image 780. The preview image 780 may be changed by at least one of the movement of the point and the adjustment of a size thereof.

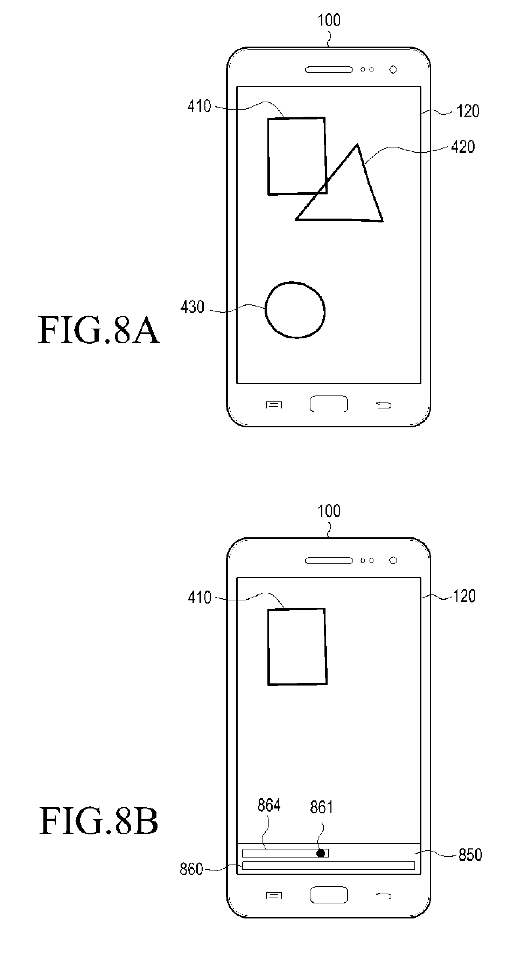

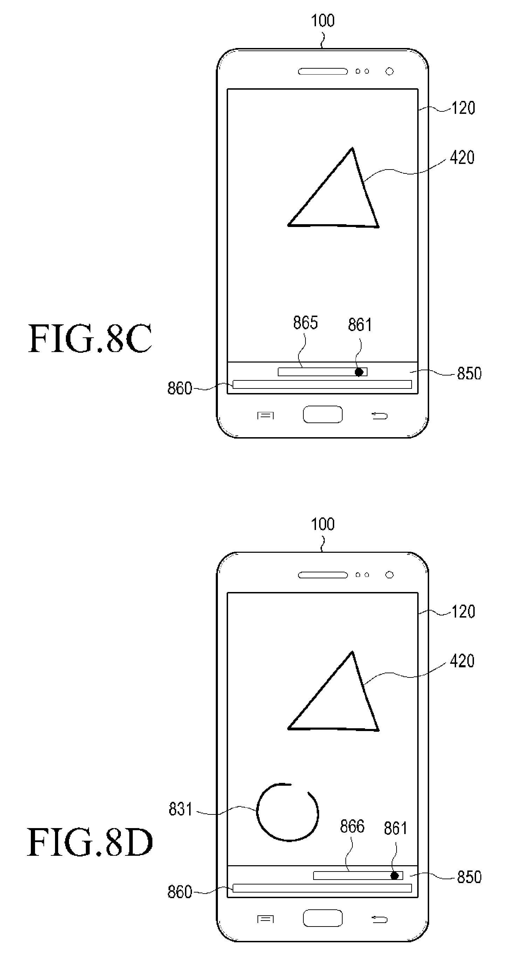

Referring to FIG. 8, FIG. 8A is a screen view illustrating at least one object displayed on the screen according to the first embodiment of the present invention, FIG. 8B is a screen view illustrating a process of controlling a reproduction time of the progress bar displayed on the screen so as to reproduce the corresponding object according to the first embodiment of the present invention, FIG. 8C is a screen view illustrating a process of controlling a reproduction time of the progress bar displayed on the screen so as to reproduce the corresponding object according to the first embodiment of the present invention, and FIG. 8D is a screen view illustrating a process of controlling a reproduction time of the progress bar displayed on the screen so as to reproduce the corresponding object according to the first embodiment of the present invention.

Referring to FIGS. 8A and 8B, one or more objects 410, 420 and 430 are displayed on the screen 120. Further, the screen 120 includes a region 850 to display the progress bar 860 which indicates a total time taken to input all displayed objects, or a time taken to reproduce all objects. The controller 110 allows the user to set the progress bar 860 included in the region 850 to his/her desired time interval. For example, when the user selects the first time interval within the progress bar 860, the first selected time interval 864 is displayed in the region 850. Then, the controller 110 analyzes a starting time and a finishing time of the first selected time interval, and starts to reproduce at least one object 410 corresponding to the first time interval. When the first time interval 864 is selected in FIG. 8B, the at least one object 410 corresponding to the first selected time interval is reproduced corresponding to the input time. When a point 861 of the first time interval is located at the right end of the first time interval, it means the reproduction of the first object 410 is completed. The point 861 of the progress bar may be moved to the left or right as at least one object is reproduced. Further, the point 861 of the progress bar according to another embodiment of the present disclosure may be moved left as at least one object is reproduced. Referring to FIG. 8C, when the user selects the second time interval from the progress bar 860, the controller 110 displays the second selected time interval 865 in the region 850. Then, the controller 110 analyzes a starting time and a finishing time of the second selected time interval, and starts to reproduce at least one object 420 corresponding to the second time interval. When the second time interval 865 is selected in FIG. 8C, the at least one object 420 corresponding to the second selected time interval is reproduced corresponding to the input time. The second time interval 865 is formed at a position further to the right than the first time interval 864 of FIG. 8B. This indicates that a reproduction starting point of the second time interval 865 is positioned before the reproduction finishing point of the first time interval 864, and a reproduction finishing point of the second time interval 865 is positioned after the reproduction finishing point of the first time interval 864. At least one object corresponding to the second time interval 865 may be reproduced. When a point 861 of the second time interval is located at the right end of the second time interval, it means the reproduction of the second object 420 is completed. The point 861 of the progress bar may be moved to the left or right as at least one object is reproduced. Further, the point 861 of the progress bar according to another embodiment of the present disclosure may be moved left as at least one object is reproduced.

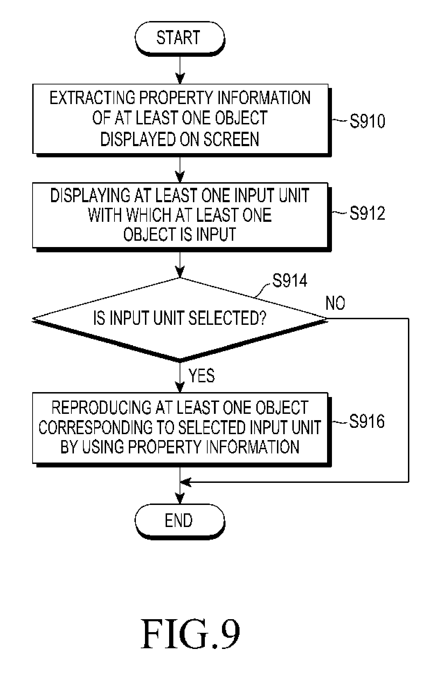

Referring to FIG. 8D, when the user selects the third time interval from the progress bar 860, the controller 110 displays the third selected time interval 866 in the region 850. Then, the controller 110 analyzes a starting time and a finishing time of the third time interval, and starts to reproduce at least one object 420 (or 831) corresponding to the third time interval. When the third time interval 866 is selected as shown in FIG. 8D, at least one object 420 (or 831) corresponding to the third time interval is reproduced corresponding to the input time. The third time interval 865 is formed at a position further to the right than the second time interval 865 of FIG. 8C. This indicates that a reproduction starting point of the third time interval 866 is positioned before the reproduction finishing point of the second time interval 865, and a reproduction finishing point of the third time interval 866 is positioned after the reproduction finishing point of the second time interval 865. At least one object corresponding to the third time interval 866 may be reproduced. When a point 861 of the third time interval is located at the right end of the third time interval, it means the reproduction of the second object 420 is completed. However, the third object 831 of FIG. 8D is different from the third object 430 of FIG. 8A. The reason for that is because an end point of the third time interval 866 is ahead of a time point when the reproduction of the third object 430 is completed. For this reason, the third object 430 does not form a circle and has an incomplete shape 831 in which a part of the circle is not reproduced. The point 861 of the progress bar may be moved to the left or right as at least one object is reproduced. FIG. 9 is a flowchart illustrating a process of reproducing an object of an electronic device according to the second embodiment of the present invention.

The controller 110 of the electronic device 100 extracts property information of at least one object displayed on the screen in step S910. The controller 110 analyzes the at least one object input to or displayed on the screen so as to create property information or extracts the corresponding property information through the at least one object displayed on the screen. The property information may include at least one of time information with relation to at least one of an input and an editing of the object, sequence information with relation to at least one of the input and the editing of the object, information on an input unit performing at least one of the input and the editing of the object, identification information of the user performing at least one of the input and the editing of the object, and information of the text into which the object is converted.

Then, the controller 110 of the electronic device 100 displays at least one input unit with which at least one object is input, in step S912. Also, the controller 110 may display at least one of the user information and the at least one input unit used to input at least one object by using the extracted property information. The input unit includes at least one of a finger, an electronic pen, a digital type pen, a pen capable of performing a short-range communication, a joystick and a stylus pen which can input an object through at least one of a touch and a hovering on the screen 120, and operates in at least one mode of a fountain pen mode, a marker mode, and a pencil mode. At least one object corresponding to the selection may be displayed with a visual effect provided corresponding to a change in any one mode selected from various modes. The user information may include information on a user identifier through which a user creating each object displayed on the screen 120 is determined.

When the input unit is selected in step S914, the electronic device 100 reproduces at least one object corresponding to the selected input unit by using the property information in step S916. The controller 110 can reproduce at least one object corresponding to a selection of at least one of the user information and at least one input unit. The controller 110 provides a visual effect to at least one object corresponding to the selection and display the object with a visual effect. Further, the controller 110 creates and displays a progress bar including a time interval at which at least one object corresponding to the selection is reproduced. Further, the controller 110 identifies an object corresponding to a point of the progress bar at which the object is input among one or more objects according to the selection, and reproduces at least one selected object on the screen 120 in correspondence to a time at which the identified object is input. Further, when at least two objects are selected, the controller 110 displays the objects on the screen by using any one of sequence of a time at which at least two objects are individually input, a recent input sequence, and a user's selection, and receives an input of each object through a different layer. For this reason, at least one object can be reproduced in sequence or reverse sequence in which the objects are input after a time at which each object is input is determined.

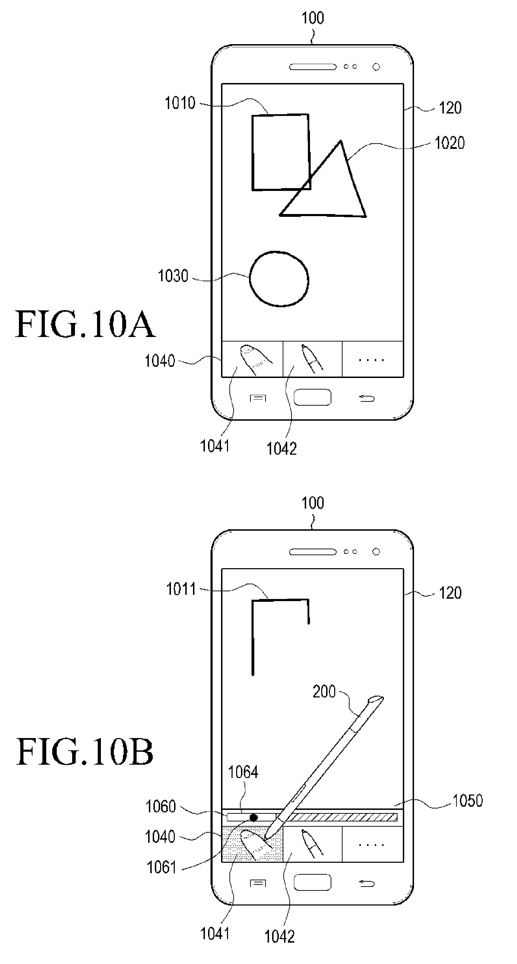

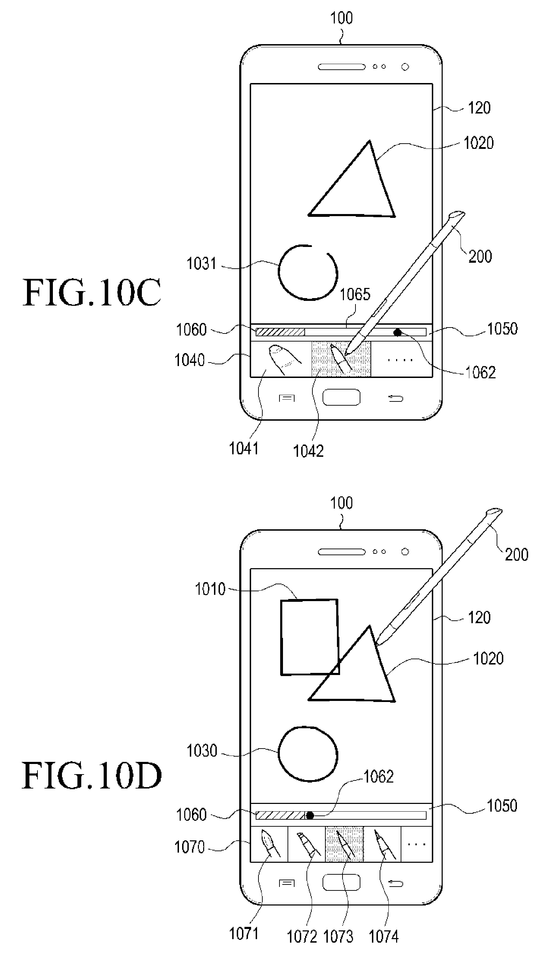

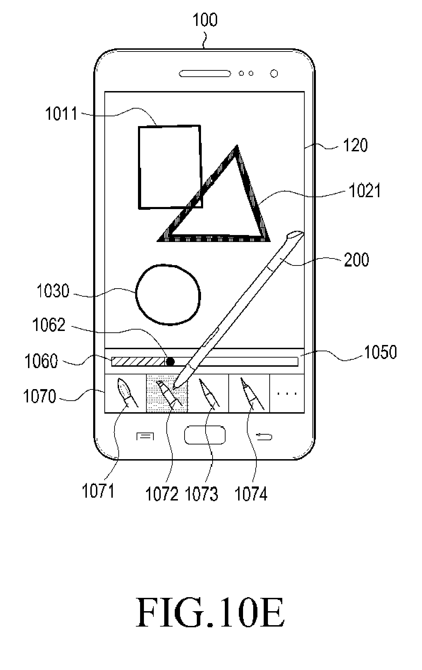

Referring to FIG. 10, FIG. 10A is a screen view illustrating a type of input units for inputting at least one object displayed on the screen according to the embodiment of the present invention, FIG. 10B is a screen view illustrating a control of reproducing at least one object when a user's finger is an input unit for inputting the object according to the embodiment of the present invention, FIG. 10C is a screen view illustrating a control of reproducing at least one object when a pen is the input unit for inputting the object according to the embodiment of the present invention, FIG. 10D is a screen view illustrating a control of displaying at least one object in a changed mode when a mode for the input unit is changed according to the embodiment of the present invention, and FIG. 10E is a screen view illustrating a result of displaying at least one object in a changed mode when a mode for the input unit is changed according to the embodiment of the present invention.

Referring to FIG. 10A, one or more objects 1010, 1020 and 1030 are displayed on the screen 120. Further, a region 1040 in which input units used to input all displayed objects respectively is displayed on the screen 120. The region 1040 includes information of the input unit used to input at least one object displayed on the screen. For example, when a finger is an input unit for inputting the first object 1010, a finger shaped icon 1041 is displayed in the region 1040. When a pen is an input unit for inputting the second and third objects 1020 and 1030, a pen shaped icon 1042 is displayed in the region 1040. The present invention may include various input units capable of inputting the object to the screen, in addition to the finger and the pen.

Referring to FIG. 10B, when the finger shaped icon 1041 is selected using an input unit 200 or a finger in the region 1040 in which the input units used to input all displayed objects respectively are displayed, the controller 110 reproduces at least one object 1011, which is input with the selected finger, on a portion of the screen 120, i.e. a portion above the region 1040. Further, the controller 110 displays a region 1050 in which a progress bar 1060 is displayed. The progress bar 1060 shows a total time taken to input all displayed objects, or a time taken to reproduce all objects. The region 1050 includes the progress bar 1060 for displaying the time taken to reproduce at least one object displayed on the screen, or a reproduction ratio of the object. Further, the progress bar 1060 activates a first time interval 1064 corresponding to a time taken to reproduce at least one object which is input with the finger, and deactivates a remaining time interval, i.e. corresponding to a time taken to reproduce at least one object which is input with other input units except for the finger. The point 1061 of the first time interval may be moved to the right or left as at least one object is reproduced. As the movement of the point 1061 to the left or right is controlled, the reproduction of the object may be controlled.

Referring to FIG. 10C, when the pen shaped icon 1042 is selected using an input unit 200 or a finger in the region 1040 in which the input units used to input all displayed objects respectively are displayed, the controller 110 reproduces one or more objects 1020 and 1031, which are input with the selected pen, on a portion of the screen 120, i.e. a portion above the region 1040. However, the third object 1031 of FIG. 1 or is different from the third object 1030 of FIG. 10A. The reproduction of the second object 1020 is completed, but the reproduction of the third object 1031 is not completed. This is because the point 1062 of the progress bar 1060 has not yet arrived at an end point, and it means that the third object 1031 is still being reproduced. For this reason, the third object 1030 fails to form a circle, and shows a circle 1031 in which a last part thereof is incomplete. Further, the controller 110 displays a region 1050 in which a progress bar 1060 is displayed. The progress 1060 bar shows a total time taken to input all displayed objects, or a time taken to reproduce all objects. The region 1050 includes the progress bar 1060 for displaying the time taken to reproduce at least one object displayed on the screen, or a reproduction ratio of the object. Further, the progress bar 1060 deactivates a first time interval 1064 corresponding to a time taken to reproduce at least one object which is input with the finger, and activates a second time interval 1065, i.e. corresponding to a time taken to reproduce at least one object which is input with a pen. The point 1062 of the second time interval may be moved to the right or left as at least one object is reproduced. As the movement of the point 1062 to the left or right is controlled, the reproduction of the object may be controlled.

Referring to FIG. 10D, when the input unit is a pen in FIG. 10C, the controller 110 controls to display at least one object which is displayed before a mode is changed, in a changed mode when a pen mode such as a fountain pen mode, a marker mode, a pencil, a ballpoint pen mode and the like, is changed. One or more objects 1010, 1020 and 1030 are displayed on the screen 120. Further, a region 1070 in which the types of pens are shown according to a mode of the input units used to input all displayed objects respectively is displayed on the screen 120. When a corresponding object is touched in order to determine the type or mode of the input unit used to input a certain object, the controller 110 analyzes the properties of the object on the touched point, and displays the type of the input unit in the region 1070. The region 1070 includes the type of the pen according to the mode of the input unit used to input at least one object displayed on the screen. The region 1070 includes a fountain pen shaped icon 1071, a marker shaped icon 1072, a pencil shaped icon 1073, and a ballpoint pen icon 1074. Further, the present invention may include various types of pen modes as well as the above mentioned pen modes, in which the object is input to the screen 120. Furthermore, when that the input unit used to input the second object 1020 is in the pencil mode, the controller 110 provides a visual effect to the pencil shaped icon 1073 in the region 1070.

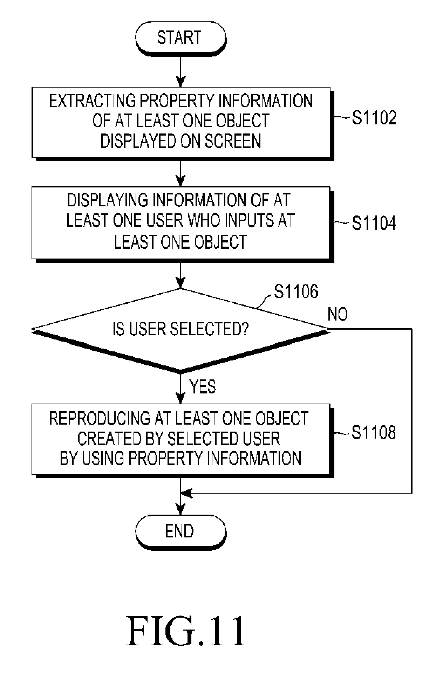

Referring to FIG. 10E, when the mode for the input unit according to the embodiment of the present invention is changed, the controller 110 applies the changed mode to at least one object and displays the object. When a desired mode, for example a marker mode, is selected using the input unit 200 in the region 1070 of FIG. 10D, the second object 1020 input in the pencil mode in FIG. 10D is changed into the second object 1021 of FIG. 10E. Further, the controller 110 displays a region 1050 in which a progress bar 1060 is displayed. The progress bar 1060 shows a total time taken to input all displayed objects, or a time taken to reproduce all objects. The region 1050 includes the progress bar 1060 for displaying the time taken to reproduce at least one object displayed on the screen 120, or a reproduction rate of the object. The progress bar 1060 activates the second time interval corresponding to a time taken to reproduce a changed object, and deactivates a remaining time interval, i.e. a time interval corresponding to a time taken to reproduce at least one unchanged object. FIG. 11 is a flowchart illustrating a process of reproducing an object of an electronic device according to the third embodiment of the present invention.

The controller 110 of the electronic device 100 extracts property information of at least one object displayed on the screen in step S1102. The controller 110 analyzes the properties of at least one object input to or displayed on the screen so as to create the property information, or extracts the corresponding property information through the at least one object displayed on the screen. The property information may include at least one of time information with relation to at least one of an input and an editing of the object, sequence information with relation to at least one of the input and the editing of the object, information on an input unit performing at least one of the input and the editing of the object, identification information of the user performing at least one of the input and the editing of the object, and information of the text into which the object is converted.

Then, the controller 110 of the electronic device 100 displays information on at least one user who inputs at least one object, in step S1104. Also, the controller 110 may display at least one of the user information and the at least one input unit used to input at least one object by using the extracted property information. The user information may include information on a user identifier through which a user creating each object displayed on the screen 120 is determined.

When the user is selected in step S1106, the electronic device 100 reproduces at least one object which the selected user inputs by using the property information in step S1108. The controller 110 reproduces at least one object corresponding to a selection of at least one of the user information and at least one input unit. The controller 110 provides a visual effect to at least one object corresponding to the selection and display the object with the visual effect. Further, the controller 110 creates and displays a progress bar including a time interval at which at least one object corresponding to the selection is reproduced. Further, the controller 110 may identify an object corresponding to a point of the progress bar at which the object is input among one or more objects according to the selection, and reproduces at least one selected object on the screen 120 corresponding to a time at which the identified object is input. Further, when at least two objects are selected, the controller 110 displays the objects on the screen by using any one of sequence of a time at which at least two objects are individually input, a recent input sequence, and a user's selection, and receives an input of each object through a different layer. For this reason, at least one object can be reproduced in sequence or reverse sequence in which the objects are input after a time at which each object is input is determined.

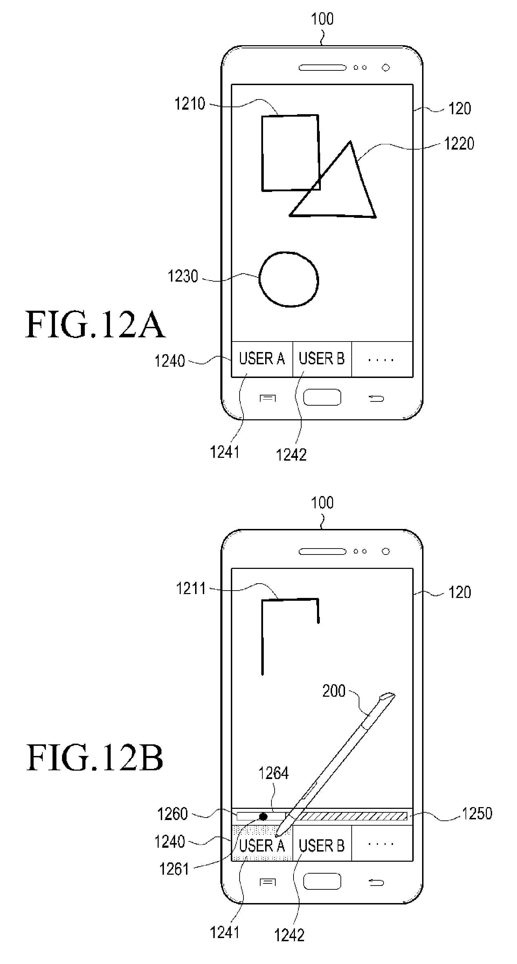

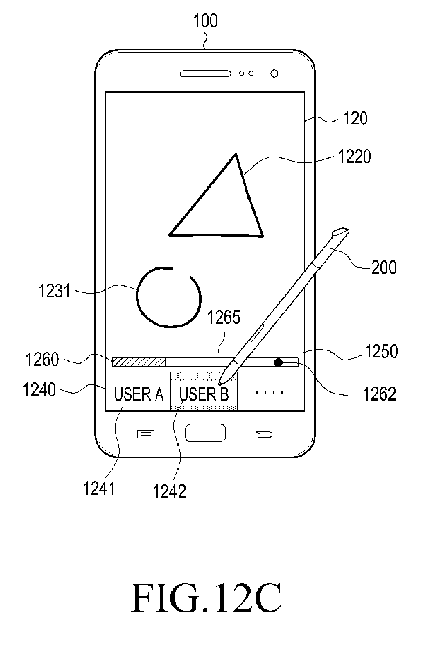

Referring to FIG. 12, FIG. 12A is a screen view illustrating users who input at least one object displayed on the screen according to the embodiment of the present invention, FIG. 12B is a screen view illustrating a process of controlling to reproduce at least one object when a user A inputs the object according to the embodiment of the present invention, and FIG. 12C is a screen view illustrating a process of controlling to reproduce at least one object when a user B inputs the object according to the embodiment of the present invention.

Referring to FIG. 12A, one or more objects 1210, 1220 and 1230 are displayed on the screen 120. Further, a region 1240 in which information on users inputting all displayed objects respectively is displayed on the screen 120. The region 1240 includes identification information of the users who input at least one object displayed on the screen. For example, when the user A inputs the first object 1210, an icon or a photograph 1241 of the user A is displayed in the region 1240. When the user B inputs the second and third objects 1220 and 1230, an icon or a photograph 1242 of the user B is displayed in the region 1240. The present invention may include other users who can input the object to the screen in addition to the users A and B.

Referring to FIG. 12B, when the icon 1241 of the user A is selected by using an input unit 200 or a finger in the region 1240 in which the users inputting all displayed objects respectively are displayed, the controller 110 reproduces at least one object 1211 which is input by the user A 1241, on a portion of the screen 120, i.e. a portion above the region 1240. Further, the controller 110 displays a region 1250 in which a progress bar 1260 is displayed. The progress bar 1260 shows a total time taken to input all displayed objects, or a time taken to reproduce all objects. The region 1250 includes the progress bar 1260 for displaying the time taken to reproduce at least one object displayed on the screen 120, or a reproduction ratio of the object. Further, the progress bar 1260 activates a first time interval 1264 corresponding to a time taken to reproduce at least one object which is input by the user A 1241, and deactivates a remaining time interval, i.e. corresponding to a time taken to reproduce at least one object which is input by other users except for the user A. The point 1261 of the first time interval may be moved to the right or left as at least one object is reproduced As the movement of the point 1261 to the left or right is controlled, the reproduction of the object may be controlled.

Referring to FIG. 12C, when the icon 1242 of the user B is selected by using an input unit 200 or a finger in the region 1240 in which the users inputting all displayed objects respectively are displayed, the controller 110 reproduces at least one object 1220 or 1231 which is input by the selected user, on a portion of the screen 120, i.e. a portion above the region 1240. However, the third object 1231 of FIG. 12C is different from the third object 1230 of FIG. 12A. The reproduction of the second object 1220 is completed, but the reproduction of the third object 1231 is not completed. This is because the point 1262 of the progress bar 1260 has not yet arrived at an end point, and means that the third object 1231 is still being reproduced. For this reason, the third object 1230 fails to form a circle, and shows a circle 1231 in which a last part thereof is incomplete. Further, the controller 110 displays a region 1250 in which a progress bar 1260 is displayed. The progress bar 1260 shows a total time taken to input all displayed objects, or a time taken to reproduce all objects. The region 1250 includes the progress bar 1260 for displaying the time taken to reproduce at least one object displayed on the screen 120, or a reproduction ratio of the object. Further, the progress bar 1260 deactivates a first time interval 1264 corresponding to a time taken to reproduce at least one object which is input by the user A, and activates a second time interval 1265 corresponding to a time taken to reproduce at least one object which is input by the user B. The point 1262 of the second time interval may be moved to the right or left as at least one object is reproduced. As the movement of the point 1262 to the left or right is controlled, the reproduction of the object may be controlled.

It will be appreciated that the embodiments of the present invention may be implemented in a form of hardware, software, or a combination of hardware and software. Any such software may be stored, for example, in a volatile or non-volatile storage device such as a ROM, a memory such as a RAM, a memory chip, a memory device, or a memory IC, or a recordable optical or magnetic medium such as a CD, a DVD, a magnetic disk, or a magnetic tape, regardless of its ability to be erased or its ability to be re-recorded. It is appreciated that the storage unit included in the electronic device is one example of a program including commands for implementing various embodiments of the present invention or a machine-readable storage medium suitable for storing programs. Therefore, embodiments of the present invention provide a program including codes for implementing a system or method claimed in any claim of the accompanying claims and a machine-readable device for storing such a program. Moreover, such a program as described above can be electronically transferred through an arbitrary medium such as a communication signal transferred through cable or wireless connection, and the present invention properly includes things equivalent to that. Further, the electronic device may receive the program from a program providing apparatus connected to the electronic device wirelessly or through a wire and store the received program. The program providing device may include a program having instructions which enable the electronic device to perform a method of controlling to display the objects, a memory for storing information necessary for an implementation of the method of controlling to display the object, a communication unit for performing wired or wireless communication with the electronic device, and a controller for transmitting a corresponding program to another portable device automatically or in response to a request of the electronic device.

Meanwhile, although certain embodiments of the present invention have been described in the detailed description of the present invention, various modifications can be made without departing from the scope of the present invention. Therefore, the scope of the present invention should not be limited to the aforementioned embodiments, but should be defined by the equivalents to the appended claims as well as the claims.

## Claims

1. A method of controlling to display an object of an electronic device, the method comprising:
displaying at least one input object on a screen;
creating and storing property information of at least one displayed object;
creating a preview window on which the at least one object is displayed so as to display the preview window in a region of the screen; and
controlling to display the at least one object by using the property information of the at least one object when the at least one object to be displayed is selected.

2. The method as claimed in claim 1, wherein controlling displaying of the at least one object includes providing a visual effect to the at least one selected object so as to display the object with the visual effect when the at least one object displayed on at least one of the screen and the preview window is selected.

3. The method as claimed in claim 2, wherein providing the visual effect to the at least one selected object includes reproducing the at least one selected object in sequence of a time when the object is input, or reproducing remaining objects except for the at least one selected object.

4. The method as claimed in claim 1, further comprising displaying a progress bar including a time interval at which the at least one selected object is reproduced by using the property information when the at least one object is selected.

5. The method as claimed in claim 4, wherein displaying the progress bar includes reproducing an object which corresponds to a point of the progress bar at which the object is input, among one or more displayed objects, corresponding to an input time.

6. The method as claimed in claim 1, wherein the property information includes at least one of time information with relation to at least one of an input and an editing of the object, sequence information with relation to at least one of the input and the editing of the object, information on an input unit performing at least one of the input and the editing of the object, identification information of the user performing at least one of the input and the editing of the object, and information of the text into which the object is converted.

7. A method of controlling to display an object of an electronic device, the method comprising:
extracting property information of at least one object displayed on a screen;
displaying at least one of information on at least one input unit with which the at least one object is input by using the extracted property information, and user information; and
reproducing the at least one object corresponding to a selection of at least one of the information on the at least one input unit and the user information which are displayed.

8. The method as claimed in claim 7, further comprising providing a visual effect to the at least one object corresponding to the selection so as to display the object with the visual effect.

9. The method as claimed in claim 7, wherein reproducing the object includes the at least one object corresponding to the selection by using the extracted property information.

10. An electronic device for controlling to display an object, the electronic device comprising:
a screen on which at least one object to be input is displayed; and
a controller configured to create property information on the at least one object, create and display a preview window including the at least one object, and control to display the at least one object by using the property information when the at least one object is selected by a user.

11. The electronic device as claimed in claim 10, wherein the controller provides a visual effect to the at least one object and displays the object with the visual effect when the at least one object displayed on at least one of the screen and the preview window is selected.

12. The electronic device as claimed in claim 10, wherein the controller creates a progress bar including a time interval at which the at least one selected object is reproduced, by using the property information, and displays the progress bar on the screen when the at least one object is selected.

13. The electronic device as claimed in claim 10, wherein the controller displays at least two objects by using any one of sequence of a time and recent input sequence when the two objects are input, and a selection of a user for the two objects when at least two objects are selected, in which the objects have different layers, respectively.

14. The electronic device as claimed in claim 10, wherein the controller extracts property information corresponding to the at least one object in response to a detection by at least one of a touch or hovering of an input unit and a user's sight.

15. The electronic device as claimed in claim 10, wherein the controller extracts property information corresponding to an input of the at least one object, and displays at least one of information on at least one unit with which the at least one object is input by using the extracted property information, and user information on the screen.
